(19) Europäisches Patentamt
European Patent Office
Office européen des brevets

(11) EP 2 273 500 A1

(12) **EUROPEAN PATENT APPLICATION**

(43) Date of publication:
**12.01.2011 Bulletin 2011/02**

(51) Int Cl.:
***G11B 7/246*** *(2006.01)*

(21) Application number: **10167884.5**

(22) Date of filing: **30.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **30.06.2009 JP 2009155935**

(71) Applicant: **FUJIFILM Corporation**
**Tokyo (JP)**

(72) Inventors:
- **Akiba, Masaharu**
**Kanagawa (JP)**
- **Takahashi, Eri**
**Kanagawa (JP)**
- **Takizawa, Hiroo**
**Kanagawa (JP)**
- **Ishida, Toshio**
**Kanagawa (JP)**

(74) Representative: **HOFFMANN EITLE**
**Patent- und Rechtsanwälte**
**Arabellastraße 4**
**81925 München (DE)**

(54) **Simultaneous two-photon absorption recording-reproduction method, and simultaneous two-photon absorption recording material for use therein**

(57) A simultaneous two-photon absorption recording-reproduction method of recording and reproducing a data by inducing changes in the fluorescence intensities in a recorded part and an unrecorded part by simultaneous two-photon absorption, comprising: generating a fluorescence quencher in a two-photon recording part; and inducing quenching by excitation energy transfer between the fluorescence quencher and a fluorescent dye to physically quench the fluorescence by reproduction light from the fluorescent dye and decrease the fluorescence intensity in the recorded part; and a simultaneous two-photon absorption recording material for use in the method capable of generating a fluorescence quencher capable of inducing quenching by excitation energy transfer between the fluorescence quencher and a fluorescent dye by simultaneous two-photon absorption and physically quenching the fluorescence from the fluorescent dye.

FIG. 1

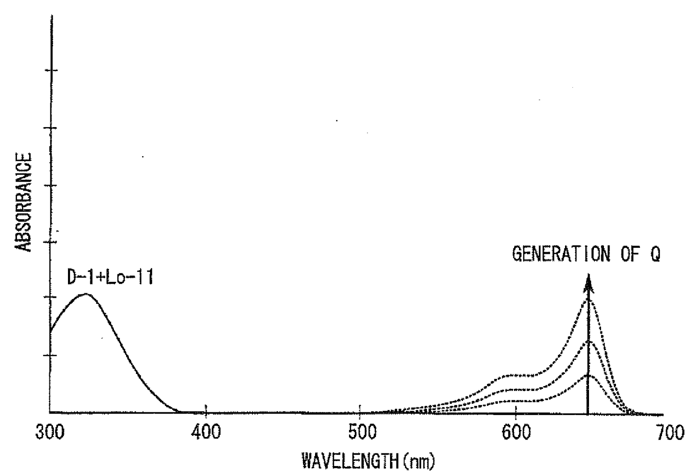


EP 2 273 500 A1

Printed by Jouve, 75001 PARIS (FR)

## Description

BACKGROUND OF THE INVENTION

1. Field of the Invention

The present invention relates to a simultaneous two-photon absorption recording-reproduction method and a simultaneous two-photon absorption recording material for use therein, and specifically a method of three-dimensionally recording a recording pit in a recording medium by simultaneous two-photon absorption and reading the recording pit recorded. More specifically, the invention relates to a simultaneous two-photon absorption recording-reproduction method of recording a signal by the reduction of fluorescence intensity at an irradiated part with a recording light before and after recording reaction using two-photon absorption, and a high sensitivity simultaneous two-photon absorption recording material for realizing the method.

2. Description of the Related Art

In general, nonlinear optical effect means a nonlinear optical response proportional to the square, cube or higher power of the applied photoelectric field. As the second order nonlinear optical effects proportional to the square of the applied photoelectric field, second harmonic generation (SHG), optical rectification, photo-refractive effect, Pockels effect, parametric amplification, parametric oscillation, sum frequency mixing of light, and difference frequency mixing of light are known. As the third order nonlinear optical effects proportional to the cube of the applied photoelectric field, third harmonic generation (THG), optical Kerr effect, self-induced refractive index change and two-photon absorption are exemplified.

As the nonlinear optical materials exhibiting these nonlinear optical effects, a variety of inorganic materials have been found until now. However, it has been very difficult to use inorganic materials in practice for the reason that what is called molecular design to optimize desired nonlinear optical characteristics or various physical properties necessary to manufacture a device is difficult. On the other hand, organic compounds are not only capable of optimization of desired nonlinear optical characteristics by molecular design but also control of other various physical properties and the possibility of practical use is high, so that organic materials are attracting public attention as promising nonlinear optical materials.

In recent years, of the nonlinear optical characteristics of organic compounds, third order nonlinear optical effect, in particular, non-resonant two-photon absorption is becoming the object of public attention. Two-photon absorption is a phenomenon such that a compound is excited by the absorption of two photons simultaneously. The case where two-photon absorption occurs in the energy region having no (linear) absorption band of the compound is called non-resonant two-photon absorption. In the following description, "two-photon absorption" means "non-resonant two-photon absorption" even when not especially indicated. Further, "simultaneous two-photon absorption" is sometimes referred to as merely "two-photon absorption" by omitting "simultaneous".

The efficiency of non-resonant two-photon absorption is proportional to the square of photoelectric field applied (quadratic dependency of two-photon absorption). Accordingly, when a laser is irradiated on a two-dimensional plane, two-photon absorption occurs only at the position having high electric field strength of the center part of laser spot, and two-photon absorption does not occur at all at the peripheral part having weak electric field strength. On the other hand, in a three-dimensional space, two-photon absorption occurs only in the region having large electric field strength at the focus where the laser rays are converged through a lens, and two-photon absorption does not take place at all in the region being off the focus for the reason that the electric field strength is weak. As compared with the linear absorption at which excitation occurs at all the positions in proportion to the strength of photoelectric field applied, spatial resolution is extraordinarily improved in the non-resonant two-photon absorption, since excitation takes place at only one point in the space due to quadratic dependency.

In general, in the case of inducing non-resonant two-photon absorption, a short pulsed laser in a near infrared region having no absorption which is on the side longer than the wavelength region where the (linear) absorption band of a compound is present is used in many cases. Since a near infrared ray in what is called a transparent region is used, an excited light can reach the inside of a sample without being absorbed or scattered, and one point inside the sample can be excited due to quadratic dependency of non-resonant two-photon absorption with extremely high spatial resolution.

Until now, the present inventors have applied for various patents concerning two-photon-sensitizing type three-dimensional recording materials using a compound inducing non-resonant two-photon absorption. These recording materials are recording materials containing at least (1) a two-photon absorption compound (a two-photon sensitizer), and (2) a refractive index modulating material or a fluorescence intensity modulating material, wherein compound (1) efficiently performs two-photon absorption and the acquired photo-energy is delivered to material (2) by means of photo-inductive electron transfer or energy transfer, and recording is conducted by modulating the refractive index or fluorescence intensity of material (2). By using non-resonant two-photon absorption not one-photon absorption used in ordinary photo-recording in the light absorption process, it becomes possible to write a recording pit on ordinary position in the inside of the recording material with three-dimensional spatial resolution.

For example, patent document 1 discloses a technique using, as refractive index modulating material or fluorescence intensity modulating material (2), a material capable of modulating a refractive index by color development of a dye, or a material capable of modulating fluorescence by changing from non-fluorescence to fluorescent emission or from fluorescent emission to non-fluorescence (a material capable of modulating a refractive index or fluorescence by color development of a dye or a fluorescent dye).

Further, as a two-photon absorption recording material capable of recording and reading out a data by inducing changes in the fluorescence intensities in a recorded part and an unrecorded part by simultaneous two-photon absorption, a recording material of a type capable of decreasing fluorescence intensity in a recorded part by two-photon absorption is disclosed in patent document 2. The recording material of a type capable of decreasing fluorescence intensity in a recorded part by two-photon absorption disclosed in patent document 2 is a recording material wherein a fluorescent two-photon absorption compound causes chemical reaction with a coexisting decoloring precursor by two-photon absorption and changes to a non-fluorescent compound.

[Patent Document 1] JP-A-2007-87532 (The term "JP-A" as used herein refers to an "unexamined published Japanese patent application".)

[Patent Document 2] JP-A-2005-100606

SUMMARY OF THE INVENTION

However, in the recording material of a type capable of decreasing fluorescence intensity in a recorded part by two-photon absorption as disclosed in patent document 2, since fluorescence decreases in the part of the reaction of the two-photon absorbed fluorescent two-photon absorption compound and the decoloring precursor alone, a large amount of fluorescent compound must be subjected to chemical change, so that sensitivity is not sufficient.

An object of the invention is to provide a two-photon absorption recording-reproduction technique capable of decreasing fluorescence intensity in a recorded part by two-photon absorption showing higher sensitivity than conventional techniques.

As a result of the earnest examinations, the present inventors have found that the above problem can be solved by the following constitution.

(1) A simultaneous two-photon absorption recording-reproduction method of recording and reproducing a data by inducing changes in the fluorescence intensities in a recorded part and an unrecorded part by simultaneous two-photon absorption, comprising:

generating a fluorescence quencher in a two-photon recording part; and
inducing quenching by excitation energy transfer between the fluorescence quencher and a fluorescent dye to physically quench the fluorescence by reproduction light from the fluorescent dye and decrease the fluorescence intensity in the recorded part.

(2) A simultaneous two-photon absorption recording-reproduction method, comprising:

recording by making a simultaneous two-photon absorption recording material cause simultaneous two-photon absorption to generate a fluorescence quencher capable of inducing quenching by excitation energy transfer between the fluorescence quencher and a fluorescent dye,
irradiating the recording material with production light capable of exciting the fluorescent dye,
physically quenching the fluorescence from the fluorescent dye by the excitation energy transfer, and
reproducing by comparing the difference in the fluorescence intensity between the two-photon absorption recorded part where fluorescence intensity is decreased and the unrecorded part.

(3) A simultaneous two-photon absorption recording material for use in the simultaneous two-photon absorption recording-reproduction method as described in (1) or (2) above, which generates a fluorescence quencher capable of inducing quenching by excitation energy transfer between the fluorescence quencher and a fluorescent dye by simultaneous two-photon absorption and physically quenching the fluorescence from the fluorescent dye.

(4) The simultaneous two-photon absorption recording material as described in (3) above, comprising:

(a) a fluorescent dye having a linear absorption band at the reproduction wavelength and emitting fluorescence by exciting the linear absorption of the linear absorption band,

(b) a two-photon absorption compound not having a linear absorption band at the reproduction wavelength, and
(c) a fluorescence quencher precursor generating a fluorescence quencher upon reaction with the two-photon excitation state of the two-photon absorption compound.

(5). The simultaneous two-photon absorption recording material as described in (3) or (4) above, wherein the fluorescent spectrum of the fluorescent dye and the absorption spectrum of the fluorescence quencher overlap each other at least partly.
(6) The simultaneous two-photon absorption recording material as described in any one of (3) to (5) above, wherein the maximum wavelength of the absorption spectrum of the fluorescence quencher generated from the fluorescence quencher precursor appears on the side longer than the maximum wavelength of the fluorescent spectrum of the fluorescent dye.
(7) The simultaneous two-photon absorption recording material as described in any one of (3) to (6) above, wherein the maximum wavelength of absorption spectrum of the fluorescent dye is on the side longer than the maximum wavelengths of linear absorption of the two-photon absorption compound and the fluorescence quencher precursor.
(8) The simultaneous two-photon absorption recording-reproduction method as described in (1) or (2) above, comprising forming a recording pit which is decreased in fluorescence intensity by induction of recording reaction by two-photon absorption on the simultaneous two-photon absorption recording material as described in any one of (3) to (7) above, and reproducing by comparison of the difference in the fluorescence intensity in the recorded part and the unrecorded part by irradiation with a reproduction light corresponding to the linear absorption band of the fluorescent dye.

The two-photon absorption recording-reproduction technique in the invention of the type which is decreased in fluorescence intensity in a two-photon absorption recorded part is higher sensitivity than conventional ones.

BRIEF DESCRIPTION OF THE DRAWINGS

Fig. 1 is a drawing showing absorption spectra of two-photon absorption compound D-1, fluorescence quencher precursor Lo-11, and fluorescence quencher Q generated from Lo-11.
Fig. 2 is a drawing showing absorption spectra of two-photon absorption compound D-1, fluorescence quencher precursor Lo-11, fluorescent dye FD-1, and fluorescence quencher Q generated from Lo-11, and the fluorescent spectrum of FD-1.

DETAILED DESCRIPTION OF THE INVENTION

The simultaneous two-photon absorption recording-reproduction technique in the invention will be described in detail below.
The simultaneous two-photon absorption recording-reproduction method in the invention (hereinafter also referred to as merely "recording-reproduction method") is a method of recording and reproducing a data by inducing change in the fluorescence intensity in a recorded part and an unrecorded part by simultaneous two-photon absorption. The method is **characterized in that** a fluorescence quencher is generated in a recording part by two-photon absorption, and quenching by excitation energy transfer is induced between the fluorescence quencher and a fluorescent dye to physically quench the fluorescence by reproduction light from the fluorescent dye and decrease the fluorescence intensity in the recorded part. Further, recording is performed by causing simultaneous two-photon absorption in a simultaneous two-photon absorption recording material (hereinafter also referred to as merely "a recording material") and generating a fluorescence quencher capable of inducing quenching by excitation energy transfer between the fluorescence quencher and the fluorescent dye, and reproduction is performed by irradiation with a reproduction light capable of exciting the fluorescent dye to physically quench the fluorescence from the fluorescent dye by excitation energy transfer, and comparing the difference in the fluorescence intensity between the two-photon absorption recording part where fluorescence intensity is decreased and the unrecorded part.
The technique in the invention differs from the technique disclosed in patent document 2 in the point that the decrease in fluorescence intensity does not depend upon chemical change. As also described later, the mechanism of action of the technique in the invention is to generate a fluorescence quencher and decrease fluorescence intensity by physical quenching (energy transfer) between a fluorescent dye and the generated fluorescence quencher. In quenching by energy transfer, a quencher of one molecule quenches the fluorescence of fluorescent dyes of several to several ten times, accordingly great amount of fluorescence can be quenched with the generation of a small amount of quenchers and sensitivity rises. Contrary to this, the technique disclosed in patent document 2 is to decrease fluorescence intensity

with chemical quenching by the chemical change of a fluorescent dye.

Chemical quenching and physical quenching in fluorescence is described below. A fluorescence quencher in the invention will be described prior to that.

[Fluorescence quencher]

Fluorescence quenching is generally such a phenomenon that photo-excitation state of a fluorescent compound interacts with a ground state molecule, the excitation energy is lost and the excited molecule disappears, and the fluorescence intensity weakens or fluorescence is not observed. A compound which performs fluorescence quenching when added to a fluorescent compound is called a fluorescence quencher.

[Chemical quenching and physical quenching]

The process for a quencher to quench the fluorescence of a fluorescent compound can be classified to a process called chemical quenching in which the photo-excitation state of a fluorescent compound causes chemical reaction with a quencher to change the structure, and quenching occurs by forming a non-fluorescent compound, and a process called physical quenching in which particular chemical reaction does not occur between the excitation state of a fluorescent compound and a quencher and chemical structures do not change mutually but, through a photo-physical process called excitation energy transfer between the excitation state of a fluorescent compound and a quencher, the excitation state of the fluorescent compound is deactivated to a ground state without being accompanied by fluorescence.

In chemical quenching, fluorescence intensity decreases only by the portion of the amount of the fluorescent compound consumed by chemical reaction, but in the case of physical quenching, the fluorescence from a fluorescent compound of many times of the addition amount can be quenched with an extremely small amount of a quencher. Accordingly, in case of intending to decrease a certain quantity of fluorescence intensity, it is possible for physical quenching to perform fluorescence quenching of a necessary quantity with a small amount of quencher as compared with chemical quenching.

[Mechanism of quenching by excitation energy transfer]

Quenching by excitation energy transfer is classified to two mechanisms called exchange mechanism and resonance mechanism according to the mechanisms of action. The characteristics of both mechanisms are described in detail in, for example, Haruo Inoue, Katsuhiko Takagi, Masako Sasaki, and Boku Shoushin, Hikari Kagaku I (Photo Chemistry I), pp. 95-99, Maruzen Co., Ltd., Publishing Department (September, 1999).

For causing energy transfer by exchange mechanism, it is necessary for energy donor and acceptor to be close to each other almost to be contact, so that the effective distance is short, and generally contribution becomes great in a state of fluidity such as solution and gas.

In the case of resonance mechanism of the other, it is not necessary for energy donor and acceptor to be in contact with each other and energy transfer is said to occur even between molecules which are 10 nm or so away. It is possible to reveal energy transfer even in a state that molecules do not migrate as in a solid, but in such a case it is essential that the fluorescence spectrum of energy donor and the absorption spectrum of energy acceptor partly overlap with each other, and the greater the overlap, the more liable is energy transfer to occur (spectral condition).

[Mechanism of generation of quencher from quencher precursor]

Recording mechanism of the two-photon absorption recording technique in the invention will be described in detail below. The two-photon absorption recording material in the invention is a recording material of a type which decreases in the fluorescence intensity of a recorded part more than that of an unrecorded part and is what is called a high-to-low type recording material, that is, signal strength is high in an unrecorded part and low in a recorded part.

In the recording material of the invention, a fluorescence quencher is generated in a recording light-irradiated part, and the fluorescence from coexisting fluorescent substance is subjected to quenching by excitation energy transfer to thereby decrease the fluorescence intensity in the recording part. Accordingly, it is necessary for the two-photon absorption recording material in the invention to contain at least two components of a fluorescent dye emitting fluorescence and a fluorescence quencher precursor which changes from a compound not having a fluorescence quenching property to a compound having a fluorescence quenching property by absorption of light.

For the purpose of improving two-photon absorption efficiency, it is preferred to add to the two-photon absorption recording material in the invention a compound having a large two-photon absorption cross-section as a two-photon absorption sensitizer. The compound added as a two-photon absorption sensitizer forms a two-photon excitation state by efficiently performing two-photon absorption and sensitizes the formation of a fluorescence quencher from a fluorescence quencher precursor by, for example, oxidation or reduction by performing direct electron transfer or energy transfer to the two-photon excitation state, or by an acid or a base generated by electron transfer or energy transfer between the two-photon excitation state and an acid generator or a base generator.

For example, as shown in the following reaction scheme, when the mixture of the later-described two-photon absorption compound D-1 and the later-described fluorescence quencher precursor Lo-11 of the invention is irradiated with light to excite D-1, excitation state D-1* of D-1 formed by light irradiation reacts with Lo-11 to form fluorescence quencher (Q). For obtaining photo-excitation state D-1 * of D-1, it is sufficient to cause two-photon absorption by irradiation with a light at the wavelength of 320 to 400 nm corresponding to linear absorption of D-1 (one-photon absorption), or with a strong light (a laser ray) at the wavelength where a linear absorption band is not present (e.g., 450 nm or 522 nm). In general, an excitation state caused by photo-excitation is the same in almost all the cases either with one-photon absorption or with two-photon absorption, so that in the observation of chemical reaction progressing by two-photon absorption, the same compound may be excited by one-photon absorption.

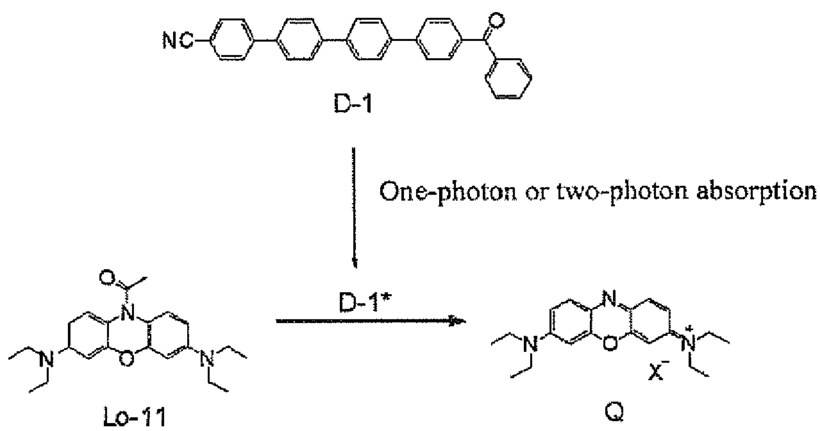

D-1

Lo-11

Q

As shown in Fig. 1, two-photon absorption compound D-1 and fluorescence quencher precursor Lo-11 do not originally have linear absorption at the longer wavelength side than 400 nm, but fluorescence quencher Q formed from fluorescence quencher precursor Lo-11 is a compound having a linear absorption band in 500 to 700 nm, so that whether fluorescence quencher Q is formed or not can be confirmed by the observation of the absorption spectrum.

Describing Fig. 1, two-photon absorption compound D-1 and fluorescence quencher precursor Lo-11 do not have absorption at the wavelength region longer than 400 nm, but quencher Q is generated by photo-excitation of two-photon absorption compound D-1 and a new absorption band appears at the wavelength region where linear absorption is not originally present.

The two-photon absorption recording material in the invention is, for example, preferably a material containing at least three components of (a) a fluorescent dye having a linear absorption band at the reproduction wavelength and emitting fluorescence by exciting the linear absorption of the linear absorption band, (b) a two-photon absorption compound not having a linear absorption band at the reproduction wavelength, and (c) a fluorescence quencher precursor generating a fluorescence quencher upon reaction with the two-photon excitation state of the two-photon absorption compound. The above fluorescent dye (a) is not especially restricted so long as it is a compound having linear absorption at the reproduction wavelength and capable of generating fluorescence by the excitation of linear absorption. For example, when FD-1 is used as such a fluorescent dye, the absorption spectrum of the two-photon absorption recording material (the sum of D-1, Lo-11 and FD-1), the fluorescence spectrum in the case of exciting FD-1 with the wavelength corresponding to the linear absorption band of FD-1, and the absorption spectrum of fluorescence quencher (Q) formed from the fluorescence quencher precursor by two-photon excitation are the spectra as shown in Fig. 2.

Considering performing reproduction by 405 nm, as shown in Fig. 1, since linear absorptions of two-photon absorption compound D-1 and fluorescence quencher precursor Lo-11 are not present in 405 nm, recording reaction for fluorescence quencher Q to be formed does not progress, and the fluorescent dye alone is excited and fluorescent signal is observed. If the recording material is irradiated with a strong laser ray of, for example, 522 nm, by stopping down the lens, simultaneous two-photon absorption of two-photon absorption compound D-1 occurs, and photo-excitation electron transfer reaction progresses with fluorescence quencher precursor Lo-11 and fluorescence quencher Q is formed. When fluorescence quencher Q is formed, excitation energy transfer occurs between fluorescence quencher Q and fluorescent dye FD-1 and the fluorescence from FD-1 is quenched and the fluorescence intensity is lessened. As shown in Fig. 2, a part of the fluorescence spectrum of energy donor FD-1 overlaps with the absorption spectrum of

energy acceptor fluorescence quencher Q, and it can be seen that the two-photon absorption recording material satisfies the spectral condition for the occurrence of excitation energy transfer by a resonance mechanism.

Incidentally, since the reaction of a two-photon absorption compound and a fluorescence quencher precursor is photo-excitation electron transfer reaction, mutual molecules may be linked to make one molecule for the improvement of reaction efficiency.

Simultaneous two-photon absorption recording materials for use in such a simultaneous two-photon absorption recording-reproduction method are materials generating a fluorescence quencher capable of physically quenching the fluorescence from a fluorescent dye by inducing excitation energy transfer from the fluorescent dye by simultaneous two-photon absorption.

As more specific constitution of the recording material, for example, a material containing at least three components of (a) a fluorescent dye having a linear absorption band at the reproduction wavelength and emitting fluorescence by exciting the linear absorption of the linear absorption band, (b) a two-photon absorption compound not having a linear absorption band at the reproduction wavelength, and (c) a fluorescence quencher precursor generating a fluorescence quencher upon reaction with the two-photon excitation state of the two-photon absorption compound is exemplified.

In the recording material of the invention, the fluorescence quencher precursor is preferably such that the maximum wavelength of the absorption spectrum of the fluorescence quencher generated therefrom appears at the wavelength side longer than the maximum wavelength of the fluorescence spectrum of the fluorescent dye, and also preferably the maximum wavelength of the absorption spectrum of the fluorescent dye is present at the wavelength side longer than the maximum wavelength of the linear absorption of the two-photon absorption compound and the fluorescence quencher precursor.

The components for use in the recording material of the invention will be described in detail below.

(a) A fluorescent dye having a linear absorption band at the reproduction wavelength and emitting fluorescence by exciting the linear absorption of the linear absorption band (hereinafter also referred to as merely "fluorescent dye")
Fluorescent dyes for use in the recording material of the invention are not especially restricted so long as they have a linear absorption band at the reproduction wavelength of the recording-reproduction method of the invention and emit fluorescence by exciting the linear absorption of the linear absorption band.
The reproduction wavelengths are not especially restricted but they are preferably wavelengths falling at the wavelength range of, for example, 400 to 660 nm.
As the specific examples of the fluorescent dyes (compounds) having a linear absorption band at the wavelength range of 400 to 660 nm, for example, the laser dyes described in Ulrich Brackmann, Lambdachrome Laser Dyes, 3rd Edition (2000), Lambda Physik AG, Germany. More preferred are fluorescent compounds having a linear absorption band in the range of 400 to 500 nm, and the most preferred dyes are fluorescent compounds having a linear absorption band in 400 to 450 nm.
As the fluorescent dyes for use in the invention, those having the following structures are exemplified.

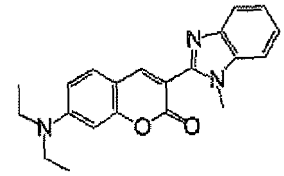

FD-1

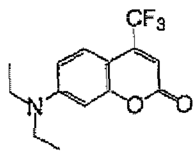

FD-2

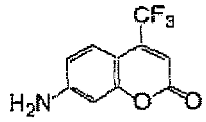

FD-3

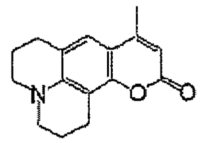

FD-4

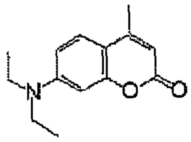

FD-5

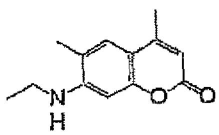

FD-6

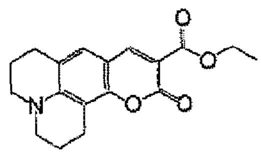

FD-7

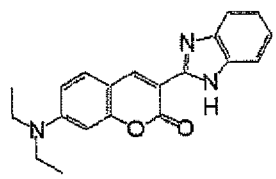

FD-8

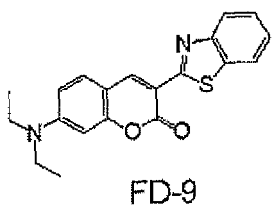

FD-9

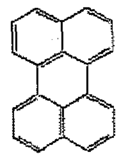

FD-10

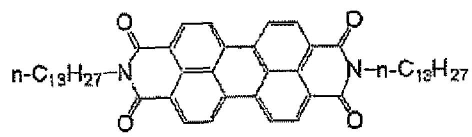

FD-11

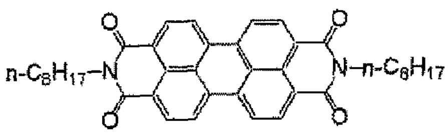

FD-12

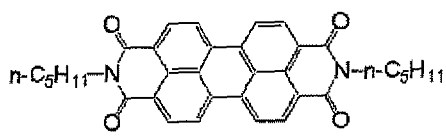

FD-13

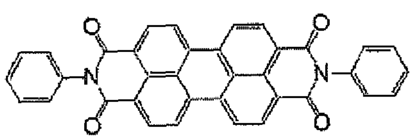

FD-14

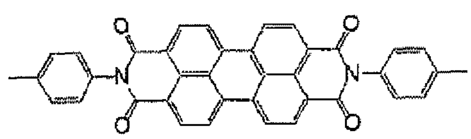

FD-15

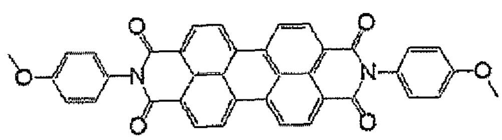

FD-16

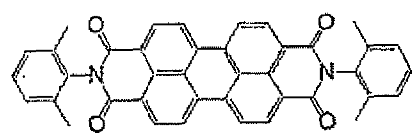

FD-17

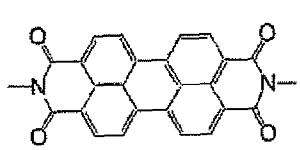

FD-18

(b) A two-photon absorption compound not having a linear absorption band at the reproduction wavelength (hereinafter also referred to as merely "two-photon absorption compound")

Two-photon absorption compounds for use in the invention are described below.

The efficiency of the molecule of a two-photon absorption compound to cause non-resonant simultaneous two-photon absorption is generally expressed by a physical property of a two-photon absorption cross-section, and it is said that the larger the value, the better is the efficiently of simultaneous two-photon absorption to be caused. In general, every compound has a property of performing non-resonant simultaneous two-photon absorption but the efficiency is usually very low. According to A.A. Angeluts, N.I. Koroteev, S.A. Krikunov, S.A. Magnitskii, D.V. Malakhv, V.V. Shubin, P.M. Potokov, Proc. SPIE, 3732, 232 (1999), and supervised by Yoshihiro Okino, Jisedai Hikari Memory to System Gijutsu (Optical Memories of the Next Generation and Systematic Techniques), 2nd Clause, 5th Chapter, Nikohshi Kyushu Kiroku Zairyo (Two-Photon Absorption Recording Materials) (Masaharu Akiba, pp. 219-231) (2009), published by CMC Publishing Co., Ltd., the efficiency is said to be at most several GM or so in many cases. Here, GM means the unit of a two-photon absorption cross-section, and 1GM equals $1\times10^{-50}$ $cm^4s$ $photon^{-1}$ $molecule^{-1}$.

Two-photon absorption compounds for use in the invention are not especially restricted so long as they are compounds not having a linear absorption band at the reproduction wavelength. For example, a compound having a structure represented by the following formula (1) is exemplified.

Formula (1)

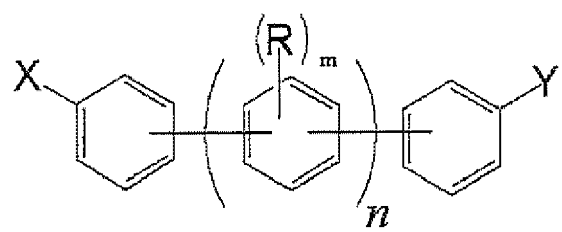

In formula (1), each of X and Y represents a substituent having a Hammett's sigma para-value (σp value) of 0 or more, which may be the same with or different from each other; n represents an integer of 1 to 4; R represents a substituent, and a plurality of R's may be the same with or different from every other R; and m represents an integer of 0 to 4.

In formula (1), each of X and Y represents a group having a σp value taking a positive value in Hammett equation, i.e., what is called an electron-withdrawing group, preferably, e.g., a trifluoromethyl group, a heterocyclic group, a halogen atom, a cyano group, a nitro group, an alkylsulfonyl group, an arylsulfonyl group, a sulfamoyl group, a carbamoyl group, an acyl group, an acyloxy group, an alkoxycarbonyl group and the like are exemplified, more preferably a trifluoromethyl group, a cyano group, an acyl group, an acyloxy group, and an alkoxycarbonyl group, and most preferably a cyano group and a benzoyl group are exemplified. Of these substituents, an alkylsulfonyl group, an arylsulfonyl group, a sulfamoyl group, a carbamoyl group, an acyl group, an acyloxy group and an alkoxycarbonyl group may further have a substituent for various purposes including giving solubility in a solvent. The examples of the substituents include an alkyl group, an alkoxy group, an alkoxyalkyl group, an aryloxy group, etc.

n represents an integer of 1 to 4, preferably 2 or 3, and most preferably 2. When n is 5 or more and the more, the more appears the linear absorption at the longer wavelength side, so that non-resonant two-photon absorption recording cannot be done with a recording light at the wavelength region shorter than 700 nm.

R represents a substituent. The substituent is not especially restricted, and specifically an alkyl group, an alkoxy group, an alkoxyalkyl group, and an aryloxy group are exemplified. m represents an integer of 0 or more and 4 or less.

In a compound having the structure represented by formula (1), the reason that each of X and Y preferably represents a group having a σp value taking a positive value in Hammett equation, what is called an electron-withdrawing group, is described below.

According to T. Kogej, et al., Chem. Phys. Lett., 298, 1 (1998), two-photon absorption efficiency of an organic compound, i.e., two-photon absorption cross-section δ, is in the following relationship with the imaginary number part of tertiary molecule polarizability (secondary hyper-polarizability) γ.

Equation (1)

$$\delta(\omega) = \left(\frac{3\pi h \nu^2}{n^2 c^2 \varepsilon_0}\right) \mathrm{Im}\,\gamma(-\omega;\omega, -\omega, \omega)$$

In equation (1), c: light velocity, v: frequency, n: refractive index, $\varepsilon_0$: dielectric constant in vacuum, ω: number of vibration of photon, and Im: imaginary number part. The imaginary number part of γ (Imγ) is in the following relationship with the dipole moment between |g> and |e>: Mge, the dipole moment between |g> and |e'>: Mge', the difference in the dipole moment between |g> and |e>: Δμge, transition energy: Ege, and damping factor: Γ.

Equation (2)

$$\mathrm{Im}\,\gamma(-\omega;\omega,-\omega,\omega) = \mathrm{Im}\;P\left[\frac{Mge^2\Delta\mu ge^2}{(Ege-\hbar\omega-i\Gamma ge)(Ege-2\hbar\omega-i\Gamma ge)(Ege-\hbar\omega-i\Gamma ge)} + \sum_{e'}\frac{Mge^2 Mee'^2}{(Ege-\hbar\omega-i\Gamma ge)(Ege'-2\hbar\omega-i\Gamma ge')(Ege-\hbar\omega-i\Gamma ge)} - \frac{Mge^4}{(Ege-\hbar\omega-i\Gamma ge)(Ege+\hbar\omega+i\Gamma ge)(Ege-\hbar\omega-i\Gamma ge)}\right]$$

In equation (2), P represents a commutative operator.

Accordingly, it is possible to forecast the two-photon absorption cross-section of a compound by computing the value of equation (2). The most stable structure of the ground state is computed by DFT method using B3LYP functional with 6-31G* as base function, and on the basis of the result, by computing Mge, Mee' and Ege, the value of Imγ can be computed. For example, in a compound having the structure represented by formula (1), when the maximum value of Imγ obtained from the computation of a quaterphenyl compound in which a methoxy group that is an electron-donating substituent is substituted on X and Y is taken as I, the relative value of the maximum value of Imγ of a molecule having a σp value taking a positive value in Hammett equation, i.e., what is called having an electron-withdrawing group, as other substituent becomes large.

In a compound having the structure represented by formula (1), as to a quaterphenyl compound in which a methoxy group that is an electron-donating group is substituted on X and Y, Imγ is small, and in a molecule in which each of X and Y is substituted with an electron-withdrawing substituent, Imγ generally greatly increases. As is also described above, since two-photon absorption cross-section δ is theoretically proportional to the imaginary number part of tertiary hyper-polarizability γ, i.e., Imγ, it is preferred from these computations that each of X and Y has a structure substituted with an electron-withdrawing substituent.

The compound having the structure represented by formula (1) is preferably a compound having a structure represented by the following formula (2).

Formula (2)

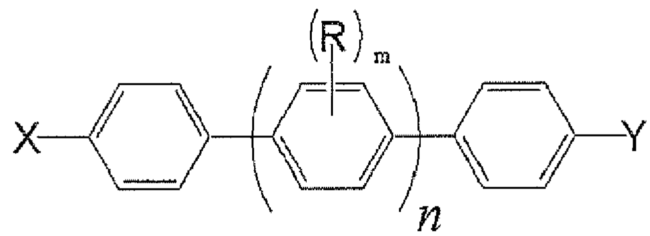

In formula (2), X, Y, n, R and m are respectively the same as those defined in formula (1).

In the compound having the structure represented by formula (1) or (2), X and Y may be the same with or different from each other, but they are preferably different for the reason that two-photon absorption cross-section shows a tendency to be great.

The compound having the structure represented by formula (1) or (2) is not especially restricted and, for example, the following are exemplified.

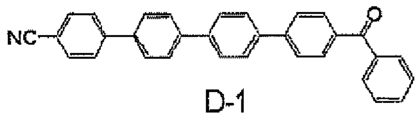

D-1

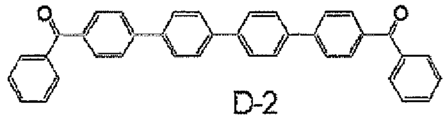

D-2

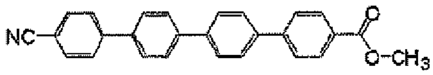

D-3

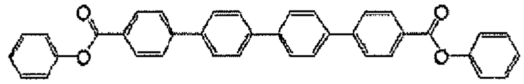

D-4

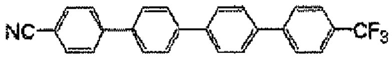

D-5

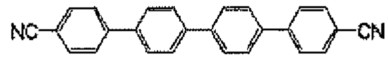

D-6

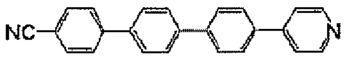

D-7

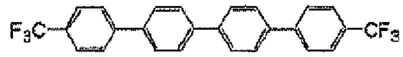

D-8

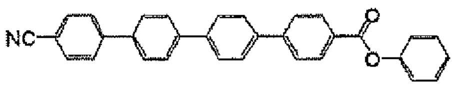

D-9

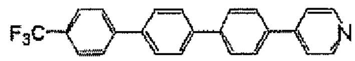

D-10

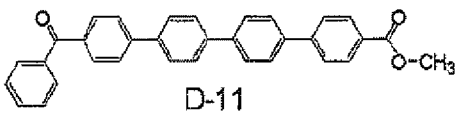

D-11

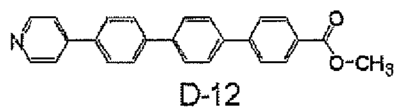

D-12

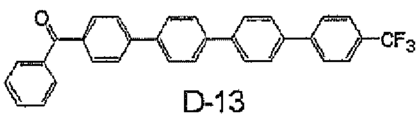

D-13

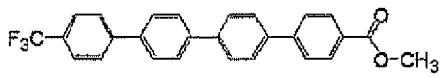

D-14

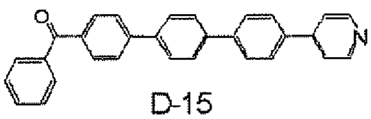

D-15

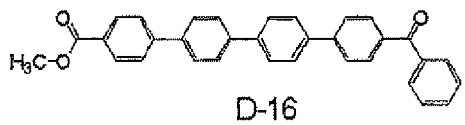

D-16

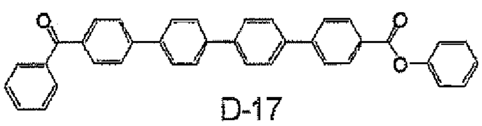

D-17

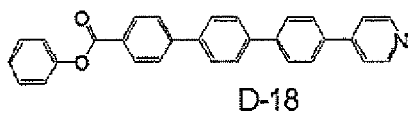

D-18

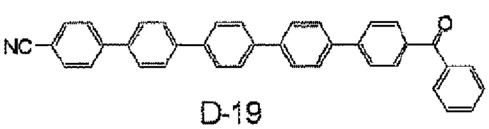

D-19

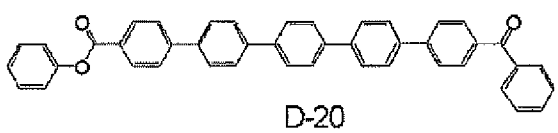

D-20

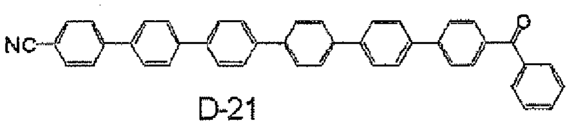

D-21

Of the above compounds, compound D-1 is preferred. D-1 is a compound having been applied for as Japanese Patent Application No. 2009-255808 as a novel compound.

(c) A fluorescence quencher precursor generating a fluorescence quencher upon reaction with the two-photon excitation state of a two-photon absorption compound (hereinafter also referred to as merely "fluorescence quencher

precursor")

Fluorescence quencher precursors for use in the invention are not especially restricted so long as they are fluorescence quencher precursors reacting with the two-photon excitation state of a two-photon absorption compound to generate a fluorescence quencher capable of physically quenching the fluorescence from a fluorescent dye by inducing quenching by excitation energy transfer between the fluorescence quencher and the fluorescent dye. For example, (A) a fluorescence quencher precursor capable of generating a fluorescence quencher by the action of an acid, (B) a fluorescence quencher precursor capable of generating a fluorescence quencher by the action of a base, (C) a fluorescence quencher precursor capable of generating a fluorescence quencher by oxidation, and (D) a fluorescence quencher precursor capable of generating a fluorescence quencher by reduction are exemplified.

Each of these compounds will be explained.

(A) A fluorescence quencher precursor capable of generating a fluorescence quencher by the action of an acid

The fluorescence quencher precursor is a precursor capable of becoming a fluorescence quencher that is changed in absorption from the original state by an acid generated by electron transfer or energy transfer between the two-photon excitation state and an acid generator. As the precursor, a compound whose absorption shifts to a longer wavelength side by an acid is preferred, and a compound which develops a color from colorless by an acid is more preferred.

The examples of the acid-generating type fluorescence quencher precursors include triphenylmethane-based, phthalide-based (including indolylphthalide-based, azaphthalide-based, and triphenylmethanephthalide-based), phenothiazine-based, phenoxazine-based, fluoran-based, thiofluoran-based, xanthene-based, diphenylmethane-based, chromenopyrazole-based, leucoauramine-based, methine-based, azomethine-based, rhodamine lactam-based, quinazoline-based, diazaxanthene-based, fluorene-based, and spiropyran-based compounds. The specific examples of these compounds are disclosed, e.g., in JP-A-2002-156454 and patents cited therein, JP-A-2000-281920, JP-A-11-279328 and JP-A-8-240908.

More preferred as the acid-generating type fluorescence quencher precursors are leuco dyes having a partial structure such as lactone, lactam, oxazine or spiropyran, and fluoran-based, thiofluoran-based, phthalide-based, rhodamine lactam-based, and spiropyran-based compounds are exemplified.

In the recording material of the invention, fluorescence quenchers formed from acid-generating type fluorescence quencher precursors are preferably xanthene (fluoran) dye and triphenylmethane dye.

Incidentally, these acid-generating type fluorescence quencher precursors may be used as a mixture of two or more in an arbitrary ratio, according to necessity.

The specific examples of the acid-generating type fluorescence quencher precursors preferably used in the recording material of the invention are exemplified below but the invention is not restricted to these specific examples alone.

The phthalide-based dye precursor is preferably represented by the following formula (21).

Formula (21)

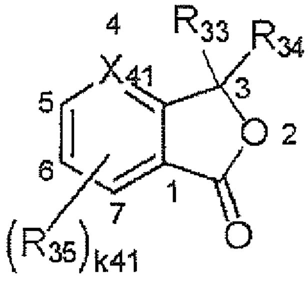

In formula (21), $X_{41}$ represents CH or N; each of $R_{33}$ and $R_{34}$ independently represents an alkyl group having 1 to 20 carbon atoms (hereinafter referred to as a C number), an aryl group having a C number of 6 to 24, a heterocyclic group having a C number of 1 to 24, or a group represented by the following formula (22); and each of $R_{35}$ independently represents a substituent (the examples of preferred substituents include, for example, an alkyl group (preferably having a C number of 1 to 20, e.g., methyl, ethyl, n-propyl, isopropyl, n-butyl, n-pentyl, benzyl, 3-sulfopropyl, 4-sulfobutyl, carboxymethyl, 5-carboxypentyl), an alkenyl group (preferably having a C number of 2 to 20, e,g., vinyl, allyl, 2-butenyl,

1,3-butadienyl), a cycloalkyl group (preferably having a C number of 3 to 20, e.g., cyclopentyl, cyclohexyl), an aryl group (preferably having a C number of 6 to 20, e.g., phenyl, 2-chlorophenyl, 4-methoxyphenyl, 3-methylphenyl, 1-naphthyl), a heterocyclic group (preferably having a C number of 1 to 20, e.g., pyridyl, thienyl, furyl, thiazolyl, imidazolyl, pyrazolyl, pyrrolidino, piperidino, morpholino), an alkynyl group (preferably having a C number of 2 to 20, e.g., ethynyl, 2-propynyl, 1,3-butadiynyl, 2-phenylethynyl), a halogen atom (e.g., F, Cl, Br, I), an amino group (preferably having a C number of 0 to 20, e.g., amino, dimethylamino, diethylamino, dibutylamino, anilino), a cyano group, a nitro group, a hydroxyl group, a mercapto group, a carboxyl group, a sulfo group, a phosphonic acid group, an acyl group (preferably having a C number of 1 to 20, e.g., acetyl, benzoyl, salicyloyl, pivaloyl), an alkoxy group (preferably having a C number of 1 to 20, e.g., methoxy, butoxy, cyclohexyloxy), an aryloxy group (preferably having a C number of 6 to 26, e.g., phenoxy, 1-naphthoxy), an alkylthio group (preferably having a C number of 1 to 20, e.g., methylthio, ethylthio), an arylthio group (preferably having a C number of 6 to 20, e.g., phenylthio, 4-chlorophenylthio), an alkylsulfonyl group (preferably having a C number of 1 to 20, e.g., methanesulfonyl, butanesulfonyl), an arylsulfonyl group (preferably having a C number of 6 to 20, e.g., benzenesulfonyl, paratoluenesulfonyl), a sulfamoyl group (preferably having a C number of 0 to 20, e.g., sulfamoyl, N-methylsulfamoyl, N-phenylsulfamoyl), a carbamoyl group (preferably having a C number of 1 to 20, e.g., carbamoyl, N-methylcarbamoyl, N,N-dimethylcarbamoyl, N-phenylcarbamoyl), an acylamino group (preferably having a C number of 1 to 20, e.g., acetylamino, benzoylamino), an imino group (preferably having a C number of 2 to 20, e.g., phthalimino), an acyloxy group (preferably having a C number of 1 to 20, e.g., acetyloxy, benzoyloxy), an alkoxycarbonyl group (preferably having a C number of 2 to 20, e.g., methoxycarbonyl, phenoxycarbonyl), and a carbamoylamino group (preferably having a C number of 1 to 20, e.g., carbamoylamino, N-methylcarbamoyl- amino, N-phenylcarbamoylamino). $R_{35}$ more preferably represents a halogen atom, e.g., a chlorine atom or a bromine atom, an alkyl group having a C number of 1 to 20, an alkoxy group having a C number of 1 to 20, an amino group, an alkylamino group having an alkyl group of a C number of 1 to 20, a dialkylamino group each independently having an alkyl group of a C number of 1 to 20, an arylamino group having an aryl group of a C number of 6 to 24, a diarylamino group each independently having an aryl group of a C number of 6 to 24, a hydroxyl group, an alkoxy group having a C number of 1 to 20, or a heterocyclic group; k41 represents an integer of 0 to 4, and when k41 is an integer of 2 or more, each of a plurality of $R_{35}$'s independently represents any of the above groups. These groups may further have a substituent.

The examples of preferred substituents include, for example, an alkyl group (preferably having a C number of 1 to 20, e.g., methyl, ethyl, n-propyl, isopropyl, n-butyl, n-pentyl, benzyl, 3-sulfopropyl, 4-sulfobutyl, carboxymethyl, 5-carboxypentyl), an alkenyl group (preferably having a C number of 2 to 20, e.g., vinyl, allyl, 2-butenyl, 1,3-butadienyl), a cycloalkyl group (preferably having a C number of 3 to 20, e.g., cyclopentyl, cyclohexyl), an aryl group (preferably having a C number of 6 to 20, e.g., phenyl, 2-chlorophenyl, 4-methoxyphenyl, 3-methylphenyl, 1-naphthyl), a heterocyclic group (preferably having a C number of 1 to 20, e.g., pyridyl, thienyl, furyl, thiazolyl, imidazolyl, pyrazolyl, pyrrolidino, piperidino, morpholino), an alkynyl group (preferably having a C number of 2 to 20, e.g., ethynyl, 2-propynyl, 1,3-butadiynyl, 2-phenylethynyl), a halogen atom (e.g., F, CI, Br, I), an amino group (preferably having a C number of 0 to 20, e.g., amino, dimethylamino, diethylamino, dibutylamino, anilino), a cyano group, a nitro group, a hydroxyl group, a mercapto group, a carboxyl group, a sulfo group, a phosphonic acid group, an acyl group (preferably having a C number of 1 to 20, e.g., acetyl, benzoyl, salicyloyl, pivaloyl), an alkoxy group (preferably having a C number of 1 to 20, e.g., methoxy, butoxy, cyclohexyloxy), an aryloxy group (preferably having a C number of 6 to 26, e.g., phenoxy, 1-naphthoxy), an alkylthio group (preferably having a C number of 1 to 20, e.g., methylthio, ethylthio), an arylthio group (preferably having a C number of 6 to 20, e.g., phenylthio, 4-chlorophenylthio), an alkylsulfonyl group (preferably having a C number of 1 to 20, e.g., methanesulfonyl, butanesulfonyl), an arylsulfonyl group (preferably having a C number of 6 to 20, e.g., benzenesulfonyl, paratoluenesulfonyl), a sulfamoyl group (preferably having a C number of 0 to 20, e.g., sulfamoyl, N-methyls-ulfamoyl, N-phenylsulfamoyl), a carbamoyl group (preferably having a C number of 1 to 20, e.g., carbamoyl, N-methylcarbamoyl, N,N-dimethylcarbamoyl, N-phenylcarbamoyl), an acylamino group (preferably having a C number of 1 to 20, e.g., acetylamino, benzoylamino), an imino group (preferably having a C number of 2 to 20, e.g., phthalimino), an acyloxy group (preferably having a C number of 1 to 20, e.g., acetyloxy, benzoyloxy), an alkoxycarbonyl group (preferably having a C number of 2 to 20, e.g., methoxycarbonyl, phenoxycarbonyl), and a carbamoylamino, group (preferably having a C number of 1 to 20, e.g., carbamoylamino, N-methylcarbamoylamino, N-phenylcarbamoylamino), and as more preferred substituents, an alkyl group, an aryl group, a heterocyclic group, a halogen atom, a cyano group, a carboxyl group, a sulfo group, an alkoxy group, a sulfamoyl group, a carbamoyl group, and an alkoxycarbonyl group are exemplified.

Formula (22)

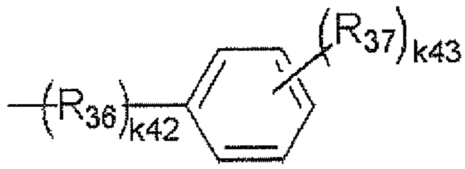

In formula (22), $R_{36}$ represents an alkylene group having a C number of 1 to 3; k42 represents an integer of 0 or 1; $R_{37}$ represents a substituent (preferred substituents are the same as the substituents exemplified in $R_{35}$ in formula (21)). $R_{37}$ more preferably represents a halogen atom, e.g., a chlorine atom, a bromine atom, etc., an alkyl group having a C number of 1 to 20, an alkoxy group having a C number of 1 to 20, an amino group, an alkylamino group having an alkyl group of a C number of 1 to 20, a dialkylamino group each independently having an alkyl group of a C number of 1 to 20, an arylamino group having an aryl group of a C-number of 6 to 24, a diarylamino group each independently having an aryl group of a C-number of 6 to 24, a hydroxyl group, an alkoxy group having a C number of 1 to 20, or a heterocyclic group; k43 represents an integer of 0 to 5, and when k43 is an integer of 2 or more, each of a plurality of $R_{37}$'s independently represents any of the above groups. These groups may further have a substituent, and as the examples of preferred substituents, the groups exemplified in the above-described $R_{35}$ can be exemplified.

In formula (21), the heterocyclic group represented by $R_{33}$ and $R_{34}$ is more preferably an indolyl group represented by the following formula (23).

Formula (23)

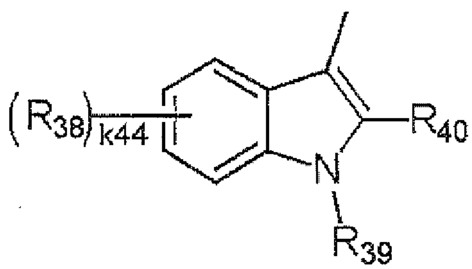

In formula (23), $R_{38}$ represents a substituent (preferred substituents are the same as the substituents exemplified in $R_{35}$ in formula (21)), and $R_{38}$ more preferably represents a halogen atom, e.g., a chlorine atom, a bromine atom, etc., an alkyl group having a C number of 1 to 20, an alkoxy group having a C number of 1 to 20, an amino group, an alkylamino group having an alkyl group of a C number of 1 to 20, a dialkylamino group each independently having an alkyl group of a C number of 1 to 20, an arylamino group having an aryl group of a C-number of 6 to 24, a diarylamino group each independently having an aryl group of a C-number of 6 to 24, a hydroxyl group, an alkoxy group having a C number of 1 to 20, or a heterocyclic group; k44 represents an integer of 0 to 4, and when k44 is an integer of 2 or more, each of a plurality of $R_{38}$'s independently represents any of the above groups. $R_{39}$ represents a hydrogen atom or an alkyl group having a C number of 1 to 20, and $R_{40}$ represents an alkyl group having a C number of I to 20 or an alkoxy group having a C number of I to 20. These groups may further have a substituent, and as the examples of preferred substituents, the groups exemplified in the above-described $R_{35}$ can be exemplified.

The specific examples of the phthalide-based dye precursors (including indolylphthalide-based dye precursors and azaphthalide-based dye precursors) include 3,3-bis(4-diethylaminophenyl)-6-diethylaminophthalide, 3-(4-diethylaminophenyl)-3-(1-ethyl-2-methylindol-3-yl)phthalide, 3-(4-dimethylaminophenyl)-3-(1,3-dimethylindol-3-yl)phthalide, 3,3-bis(1-n-butyl-2-methylindol-3-yl)phthalide, 3,3-bis(1-ethyl-2-methylindol-3-yl)phthalide, 3-(4-diethylamino-2-ethoxyphenyl)-3-(1-ethyl-2-methylindol-3-yl)-4-azaphthalide, 3,3-bis(4-hydroxyphenyl)-6-hydroxylphthalide, 3,3-bis(4-hexyloxyphenyl)phthalide, and 3,3-bis(4-hexyloxyphenyl)-6-methoxyphthalide.

The phthalide-based dye precursor represented by formula (21) is more preferably a triphenylanethanephthalide-based dye precursor represented by the following formula (24).

Formula (24)

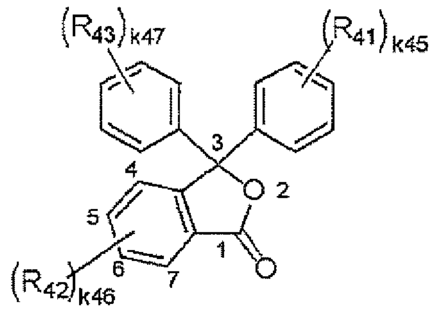

In formula (24), each of $R_{41}$, $R_{42}$ and $R_{43}$ independently represents a substituent (preferred substituents are the same as the substituents exemplified in $R_{35}$ in formula (21)). Each of $R_{41}$, $R_{42}$ and $R_{43}$ preferably represents a halogen atom, e.g., a chlorine atom or a bromine atom, an alkyl group having a C number of 1 to 20, an alkoxy group having a C number of 1 to 20, an amino group, an alkylamino group having an alkyl group of a C number of 1 to 20, a dialkylamino group each independently having an alkyl group of a C number of 1 to 20, an arylamino group having an aryl group of a C number of 6 to 24, a diarylamino group each independently having an aryl group of a C number of 6 to 24, a hydroxyl group, an alkoxy group having a C number of 1 to 20, or a heterocyclic group; each of k45, k46 and k47 independently represents an integer of 0 to 4, and when each of k45, k46 and k47 is an integer of 2 or more, each of a plurality of $R_{41}$'s, $R_{42}$'s and $R_{43}$'s independently represents any of the above groups. These groups may further have a substituent. As the substituents, the groups exemplified in $R_{35}$ in formula (21) are preferably exemplified.

The specific examples of the triphenylmethanephthalide-based dye precursors include 3,3-bis(p-dimethylaminophenyl)-6-dimethylaminophthalide (i.e., crystal violet lactone), 3,3-bis(p-dimethylamninophenyl)phthalide, 3,3-bis(p-dihexylaminophenyl)-6-dimethylaminophthalide, 3,3-bis(p-dioctylaminophenyl)phthalide, 3,3-bis(p-dimethylaminophenyl)-6-diethylaminophthalide, 4-hydroxy-4'-dimethylaminotriphenylmethane lactone, 4,4'-bisdihydroxy-3,3'-bisdiaminotriphenylmethane lactone, 3,3-bis(4-hydroxyphenyl)-4-hydroxyphthalide, 3,3-bis(4-hexyloxyphenyl)phthalide, and 3,3-bis(4-hexyloxyphenyl)-6-methoxyphthalide are exemplified.

The fluoran-based dye precursor is preferably represented by the following formula (25).

Formula (25)

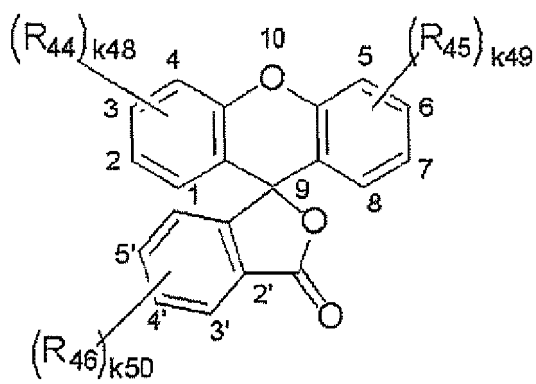

In formula (25), each of $R_{44}$, $R_{45}$ and $R_{46}$ independently represents a substituent (preferred substituents are the same as the substituents exemplified in $R_{35}$ in formula (21)). Each of $R_{44}$, $R_{45}$ and $R_{46}$ preferably represents a halogen atom, e.g., a chlorine atom or a bromine atom, an alkyl group having a C number of 1 to 20, an alkoxy group having a C number of 1 to 20, an amino group, an alkylamino group having an alkyl group of a C number of 1 to 20, a dialkylamino group each independently having an alkyl group of a C number of 1 to 20, an arylamino group having an aryl group of a C number of 6 to 24, a diarylamino group each independently having an aryl group of a C number of 6 to 14, a hydroxyl group, or a heterocyclic group; each of k48, k49 and k50 independently represents an integer of 0 to

4, and when each of k48, k49 and k50 is an integer of 2 or more, each of a plurality of $R_{44}$'s, $R_{45}$'s and $R_{46}$'s independently represents any of the above groups. These groups may further have a substituent. As the substituents, the groups exemplified in $R_{35}$ in formula (21) are preferably exemplified.

The specific examples of the fluoran-based dye precursors include 3-diethylamino-6-(2-chloroanilino)fluoran, 3-dibutylamino-6-(2-chloroanilino)fluoran, 3-diethylamino-7-methyl-6-anilinofluoran, 3-dibutylamino-7-methyl-6-anilinofluoran, 3-dipentylamino-7-methyl-6-anilinofluoran, 3-(N-ethyl-N-isopentylammo)-7-methyl-6-anilinofluoran, 3-diethylamino-7-methyl-6-xylidinofluororan, 3-diethylamino-6,7-benzofluoran, 3-diethylamino-7-methoxy-6,7-benzofluoran, 1,3-dimethyl-6-diethylaminofluoran, 2-bromo-3-methyl-6-dibutylaminofluoran, 2-N,N-dibenzylamino-6-diethylaminofluoran, 3-dimethylamino-6-methoxyfluoran, 3-diethylamino-7-methyl-6-chlorofluoran, 3-diethylamio-6-methoxyfluoran, 3,6-bisdiethylaminofluoran, 3,6-dihexylexyfluoran, 3,6-dichlorofluoran, and 3,6-diacetyloxyfluoran.

The specific examples of the rhodamine lactam-based dye precursors include Rhodamine-B-anilino lactam. Rhodamine (p-nitroanilino)lactam, Rhodamine-B-(p-chloroanilino)lactam, and Rhodamine-B-(o-chloroanilino)lactam.

The specific examples of the spiropyran-based dye precursors include 3-methyl-spirodinaphthopyran, 3 -ethyl-spirodinaphthopyran, 3,3'-dichlorospirodinaphthopyran, 3-benzyl-spirodinaphthopyran, 3-propyl-spirodibenzopyran, 3-phenyl-8'-methoxybenzoindolinospiropyran, 8'-methoxybenzoindolinospiropyran, and 4,7,8'-trimethoxybenzoindolinospiropyran.

Further, the spiropyran-based dye precursors disclosed in JP-A-2000-281920 can also be exemplified as specific examples.

As the acid-generating type fluorescence quencher precursors, the BLD compound represented by formula (6) disclosed in JP-A-2000-284475, the leuco dyes disclosed in JP-A-2000-144004, and the leuco dyes having the structures as shown below can also be preferably used.

R-1

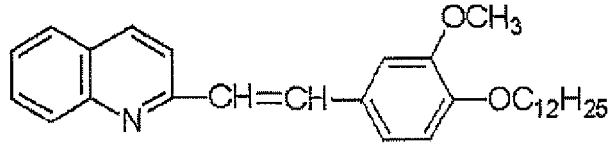

R-2

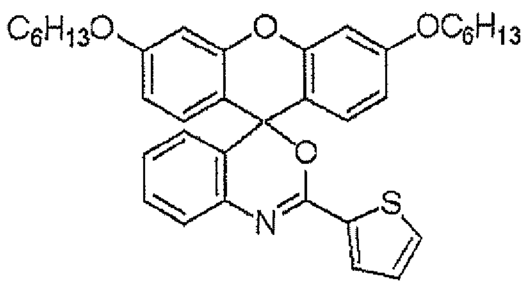

R-3

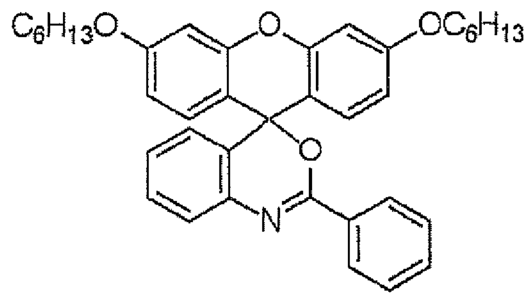

R-4

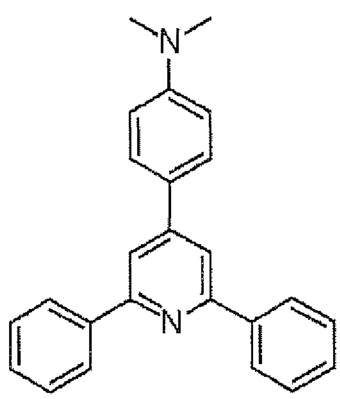

R-5

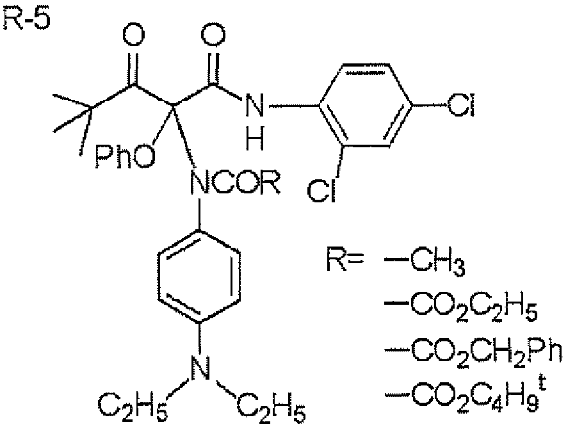

R-6

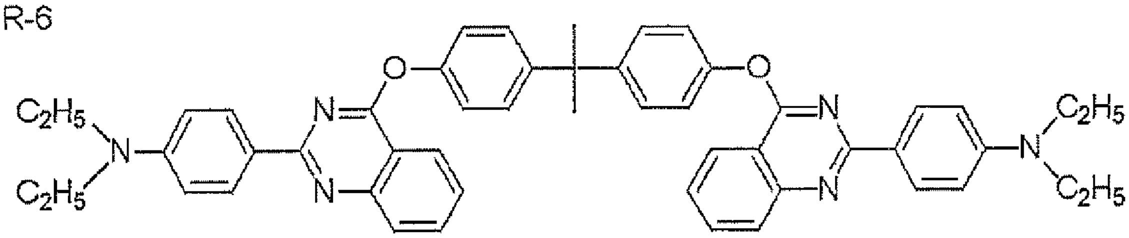

A compound represented by the following formula (26) which develops a color by addition of an acid (proton) is also preferred as the acid-generating type fluorescence quencher precursor.

Formula (26)

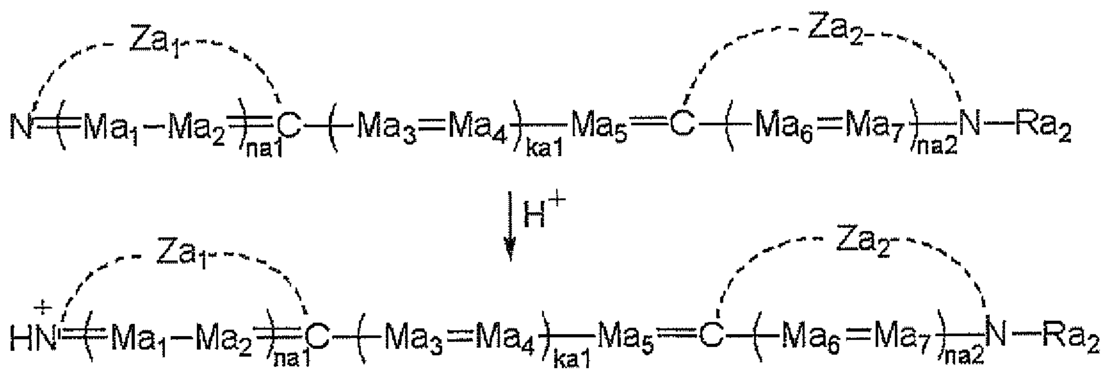

In formula (26), each of $Za_1$ and $Za_2$ represents an atomic group for forming a 5- or 6-membered nitrogen-containing heterocyclic ring. $Ra_2$ represents a hydrogen atom, an alkyl group, an alkenyl group, an aryl group, or a heterocyclic group. As the alkyl, alkenyl, aryl and heterocyclic groups, the same examples as the substituents of the same names in $R_{35}$ in formula (21) and the same preferred examples can be exemplified.

Each of $Ma_1$ to $Ma_7$ independently represents a methine group, which may have a substituent, and may form a ring with other methine group. Each of na1 and na2 represents 0 or 1, and ka1 represents an integer of 0 to 3. When ka1 is 2 or more, a plurality of $Ma_3$ and $Ma_4$ may be the same with or different from each other.

The preferred examples of the compounds represented by formula (26) are shown below, but the invention is not restricted thereto.

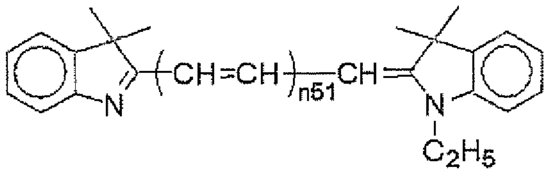

| | $n_{51}$ |
|---|---|
| LC-1 | 0 |
| LC-2 | 1 |
| LC-3 | 2 |

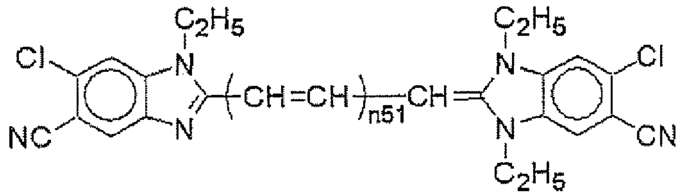

| | $n_{51}$ |
|---|---|
| LC-4 | 0 |
| LC-5 | 1 |
| LC-6 | 2 |

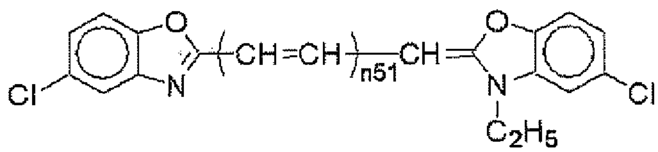

| | $n_{51}$ |
|---|---|
| LC-7 | 0 |
| LC-8 | 1 |
| LC-9 | 2 |

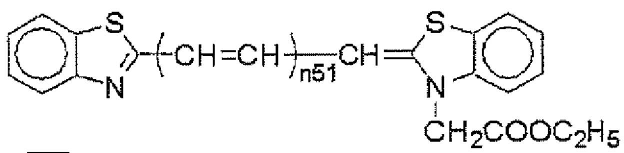

| | $n_{51}$ |
|---|---|
| LC-10 | 0 |
| LC-11 | 1 |
| LC-12 | 2 |

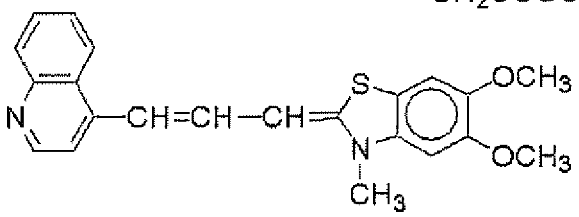

LC-13

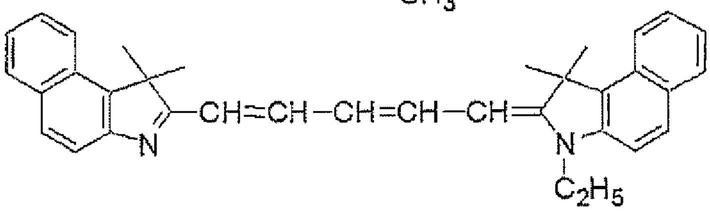

LC-14

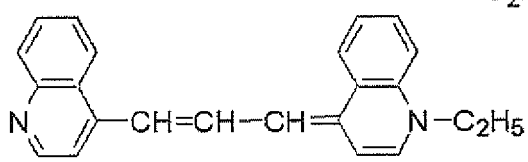

LC-15

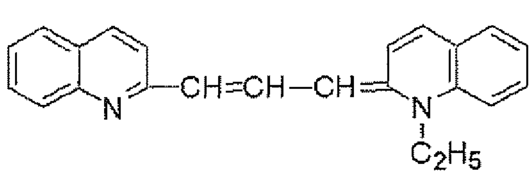

LC-16

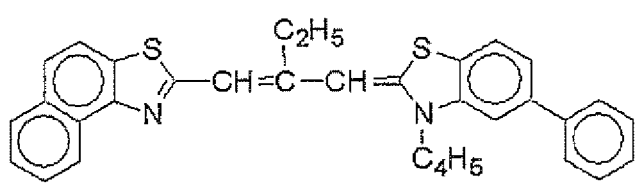

LC-17

When fluorescence quencher precursor (A) capable of generating a fluorescence quencher by an acid is used, an acid generator capable of generating an acid by energy transfer or electron transfer between the two-photon excitation state and the acid generator is used in combination. As such acid generators, conventionally known acid generators disclosed in JP-A-2005-97532, paragraphs 0217 to 0245 can be used.

(B) A fluorescence quencher precursor capable of generating a fluorescence quencher by the action of a base

The fluorescence quencher precursor is a fluorescence quencher precursor capable of becoming a fluorescence quencher that is changed in absorption from the original state by a base generated by electron transfer or energy transfer between the two-photon excitation state and a base generator.

As the fluorescence quencher precursor generating a fluorescence quencher by base generation of the invention, a compound whose absorption shifts to a longer wavelength side by a base is preferred, and a compound capable of largely increasing a molar extinction coefficient by a base is more preferred.

The base-generating type fluorescence quencher precursor in the invention is preferably a non-dissociated form of a dissociation type dye. The dissociation type dye is a compound in which a dissociative group having a pKa of 12 or less, preferably 10 or less, and capable of easily dissociating to release a proton is present on the dye chromophore and absorption is shifted to the longer wavelength side or the colorless state turns to the color-developed state by changing from the non-dissociation form to the dissociation form. The preferred examples of the dissociative groups include an OH group, an SH group, a COOH group, a $PO_3H_2$ group, an $SO_3H$ group, an $NR_{91}R_{92}H^+$ group, an $NHSO_2R_{93}$ group, a $CHR_{94}R_{95}$ group, and an $NMR_{96}$ group.

Here, each of $R_{91}$, $R_{92}$ and $R_{96}$ independently represents a hydrogen atom, an alkyl group (preferably having a C number of 1 to 20, e.g., methyl, ethyl, n-propyl, isopropyl, n-butyl, n-pentyl, benzyl, 3-sulfopropyl, 4-sulfobutyl, carboxymethyl, 5-carboxypentyl), an alkenyl group (preferably having a C number of 2 to 20, e.g., vinyl, allyl, 2-butenyl, 1,3-butadienyl), a cycloalkyl group (preferably having a C number of 3 to 20, e.g., cyclopentyl, cyclohexyl), an aryl group (preferably having a C number of 6 to 20, e.g., phenyl, 2-chlorophenyl, 4-methoxyphenyl, 3-methylphenyl, 1-naphthyl), or a heterocyclic group (preferably having a C number of 1 to 20, e.g., pyridyl, thienyl, furyl, thiazolyl, imidazolyl, pyrazolyl, pyrrolidino, piperidino, morpholino), and preferably a hydrogen atom or an alkyl group. $R_{93}$ represents an alkyl group, an alkenyl group, a cycloalkyl group, an aryl group, or a heterocyclic group (the preferred examples are the same with the examples of $R_{91}$ $R_{92}$ and $R_{96}$), preferably an alkyl group which may be substituted, or an aryl group which may be substituted, and more preferably an alkyl group which may be substituted, and the substituent here preferably has an electron-withdrawing property and is preferably fluorine.

Each of $R_{94}$ and $R_{95}$ independently represents a substituent.

The examples of the substituents include an alkyl group (preferably having a C number of 1 to 20, e.g., methyl, ethyl, n-propyl, isopropyl, n-butyl, n-pentyl, benzyl, 3-sulfopropyl, 4-sulfobutyl, carboxymethyl, 5-carboxypentyl), an alkenyl group (preferably having a C number of 2 to 20, e.g., vinyl, allyl, 2-butenyl, 1,3-butadienyl), a cycloalkyl group (preferably having a C number of 3 to 20, e.g., cyclopentyl, cyclohexyl), an aryl group (preferably having a C number of 6 to 20, e.g., phenyl, 2-chlorophenyl, 4-methoxyphenyl, 3-methylphenyl, 1-naphthyl), a heterocyclic group (preferably having a C number of 1 to 20, e.g., pyridyl, thienyl, furyl, thiazolyl, imidazolyl, pyrazolyl, pyrrolidino, piperidino, morpholino), an alkynyl group (preferably having a C number of 2 to 20, e.g., ethynyl, 2-propynyl, 1,3-butadiynyl, 2-phenylethynyl), a halogen atom (e.g., F, Cl, Br, I), an amino group (preferably having a C number of 0 to 20, e.g., amino, dimethylamino, diethylamino, dibutylamino, anilino), a cyano group, a nitro group, a hydroxyl group, a mercapto group, a carboxyl group, a sulfo group, a phosphonic acid group, an acyl group (preferably having a C number of 1 to 20, e.g., acetyl, benzoyl, salicyloyl, pivaloyl), an alkoxy group (preferably having a C number of 1 to 20, e.g., methoxy, butoxy, cyclohexyloxy), an aryloxy group (preferably having a C number of 6 to 26, e.g., phenoxy, 1-naphthoxy), an alkylthio group (preferably having a C number of 1 to 20, e.g., methylthio, ethylthio), an arylthio group (preferably having a C number of 6 to 20, e.g., phenylthio, 4-chlorophenylthio), an alkylsulfonyl group (preferably having a C number of 1 to 20, e.g., methanesulfonyl, butanesulfonyl), an arylsulfonyl group (preferably having a C number of 6 to 20, e.g., benzenesulfonyl, paratoluenesulfonyl), a sulfamoyl group (preferably having a C number of 0 to 20, e.g., sulfamoyl, N-methylsulfamoyl, N-phenylsulfamoyl), a carbamoyl group (preferably having a C number of 1 to 20, e.g., carbamoyl, N-methylcarbamoyl, N,N-dimethylcarbamoyl, N-phenylcarbamoyl), an acylamino group (preferably having a C number of 1 to 20, e.g., acetylamino, benzoylamino), an imino group (preferably having a C number of 2 to 20, e.g., phthalimino), an acyloxy group (preferably having a C number of 1 to 20, e.g., acetyloxy, benzoyloxy), an alkoxycarbonyl group (preferably having a C number of 2 to 20, e.g., methoxycarbonyl, phenoxycarbonyl), and a carbamoylamino group (preferably having a C number of 1 to 20, e.g., carbamoylamino, N-methylcarbamoylamino, N-phenylcarbamoylamino), and as more preferred substituents, an alkyl group, an aryl group, a heterocyclic group, a halogen atom, an amino group, a cyano group, a nitro group, a carboxyl group, a sulfo group, an alkoxy group, an alkylthio group, an arylsulfonyl group, a sulfamoyl group, a carbamoyl group, and an alkoxycarbonyl group are exemplified.

Of the above substituents, an electron-withdrawing substituent is preferred, e.g., a cyano group, an alkoxycarbonyl group, a carbamoyl group, an acyl group, an alkylsulfonyl group, or an arylsulfonyl group is preferred.

The dissociative groups of the dissociation type dyes are more preferably an OH group, a COOH group, an $NHSO_2R_{93}$ group, an $NHR_{96}$ group, and a $CHR_{94}R_{95}$ group, still more preferably an OH group and a $CHR_{94}R_{95}$ group, and most preferably an OH group.

The preferred examples of the non-dissociated forms of the dissociation type dyes as the base-generating type fluorescence quencher precursors in the invention include the non-dissociated forms of dissociation type azo dyes, dissociation type azomethine dyes, dissociation type oxonol dyes, dissociation type arylidene dyes, dissociation type xanthene (fluoran) dyes, and dissociation type triphenylamine dyes, and more preferred are the non-dissociated forms of dissociation type azo dyes, dissociation type azomethine dyes, dissociation type oxonol dyes, and dissociation type arylidene dyes.

The examples of the non-dissociated forms of the dissociation type dyes are shown below as the examples of the base-generating type fluorescence quencher precursors, but the invention is not restricted thereto.

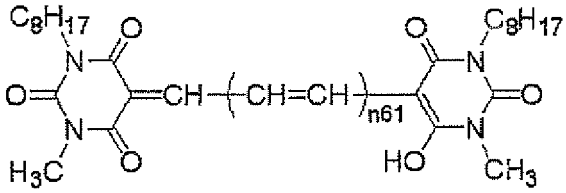

| | $n_{61}$ |
|---|---|
| DD-1 | 1 |
| DD-2 | 2 |
| DD-3 | 3 |

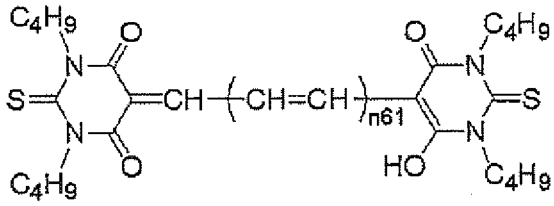

| | $n_{61}$ |
|---|---|
| DD-4 | 0 |
| DD-5 | 1 |
| DD-6 | 2 |

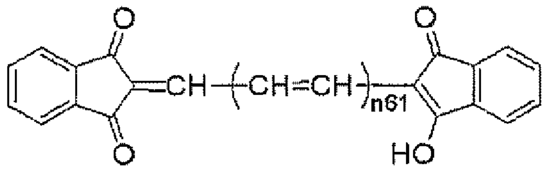

| | $n_{61}$ |
|---|---|
| DD-7 | 0 |
| DD-8 | 1 |
| DD-9 | 2 |

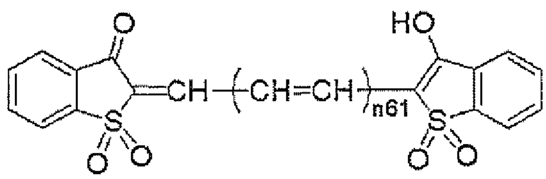

| | $n_{61}$ |
|---|---|
| DD-10 | 0 |
| DD-11 | 1 |
| DD-12 | 2 |

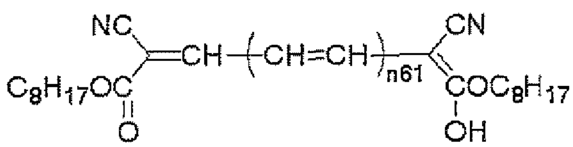

| | $n_{61}$ |
|---|---|
| DD-13 | 0 |
| DD-14 | 1 |
| DD-15 | 2 |

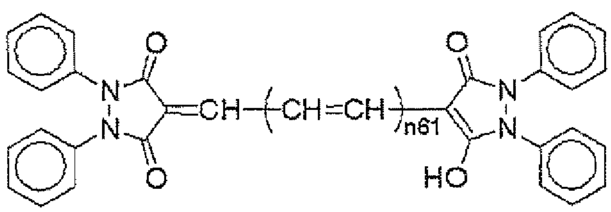

| | $n_{61}$ |
|---|---|
| DD-16 | 0 |
| DD-17 | 2 |
| DD-18 | 3 |

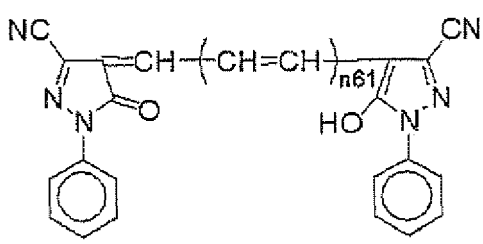

| | $n_{61}$ |
|---|---|
| DD-19 | 1 |
| DD-20 | 2 |

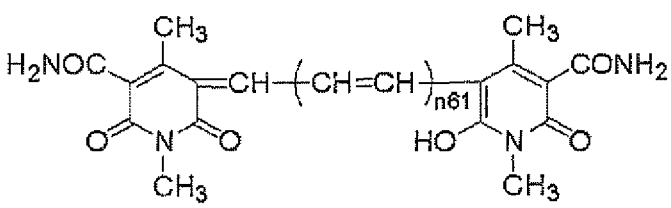

| | $n_{61}$ |
|---|---|
| DD-21 | 1 |
| DD-22 | 2 |

DD-23

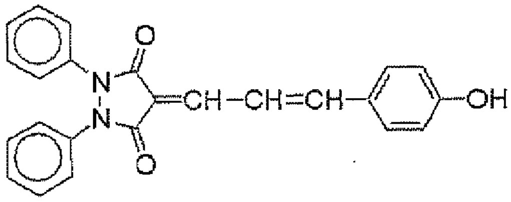

DD-24

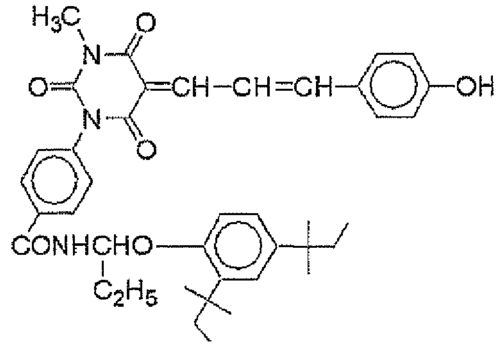

DD-25

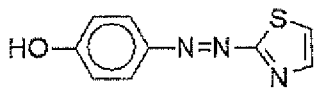

DD-26

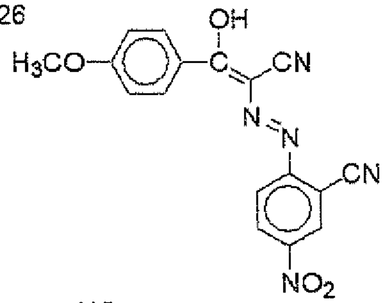

DD-27

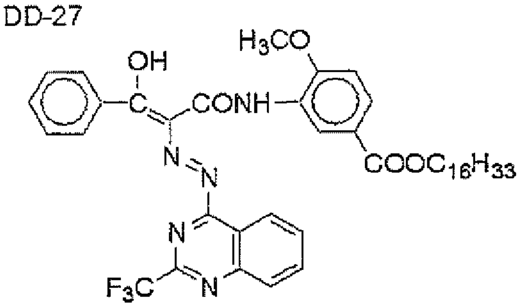

DD-28

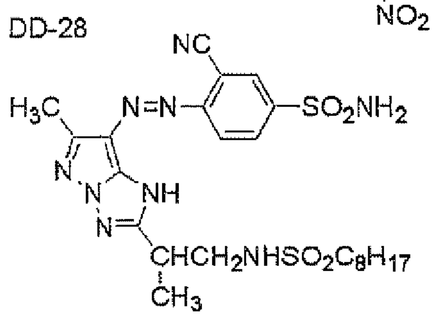

DD-29

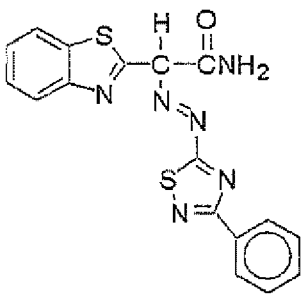

DD-30

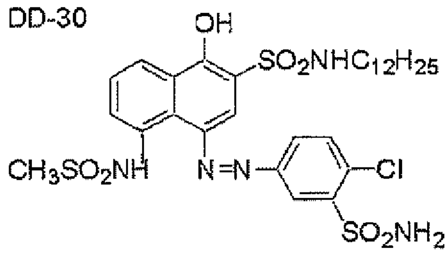

DD-31

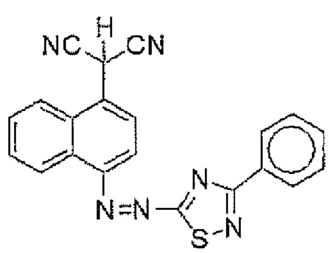

DD-32

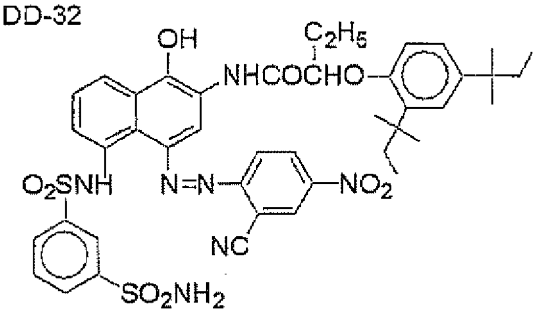

DD-33

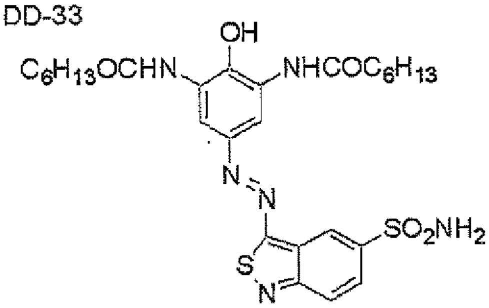

DD-34

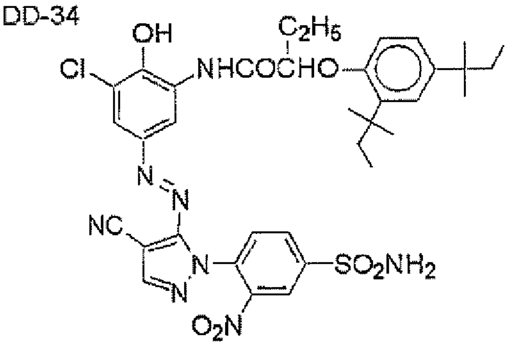

DD-35

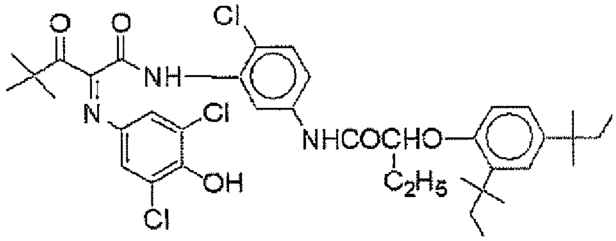

DD-36

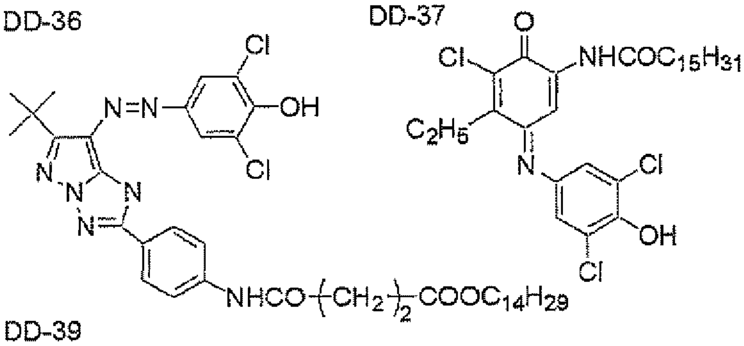

DD-37

DD-38

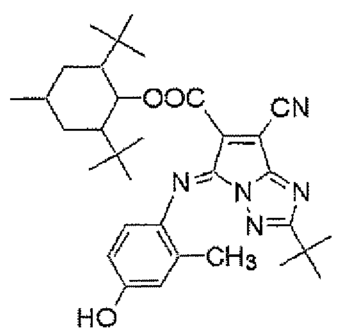

DD-39

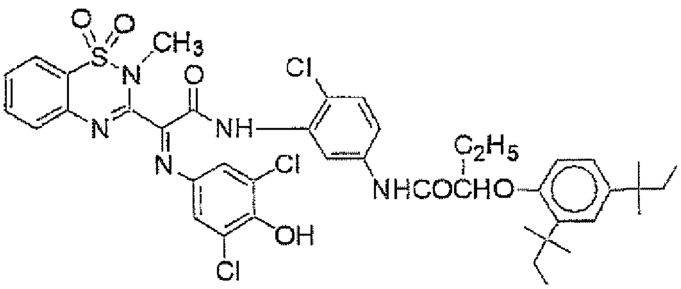

DD-40

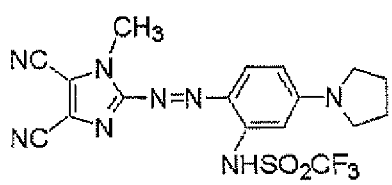

DD-41

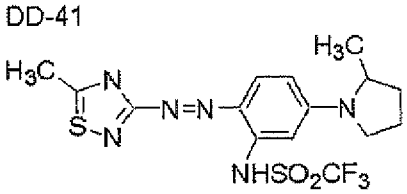

DD-42

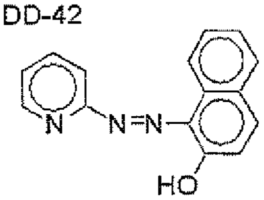

DD-43

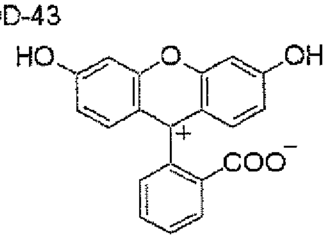

DD-44

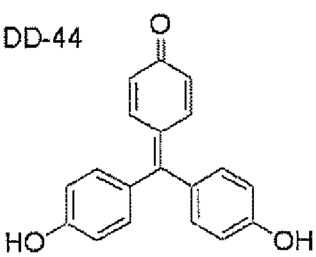

DD-45

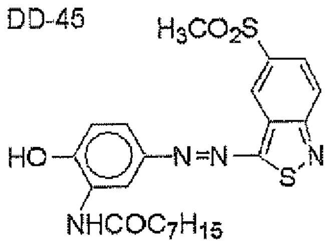

DD-46

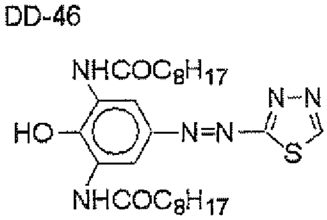

When fluorescence quencher precursor (B) capable of generating a fluorescence quencher by a base is used,

a base generator capable of generating a base by energy transfer or electron transfer between the two-photon excitation state and the base generator is used in combination. As such base generators, conventionally known base generators disclosed in JP-A-2005-97532, paragraphs 0246 to 0267 can be used.

(C) A fluorescence quencher precursor capable of generating a fluorescence quencher by oxidation

The fluorescence quencher precursors are not especially restricted so long as they are compounds capable of forming a radical intermediate in which one electron is oxidized by direct electron transfer to a two-photon excitation state, subsequently a fluorescence quencher by further oxidized the intermediate, and it is preferred to contain at least one or more compounds of leucoquinone compounds, thiazineleuco compounds, oxazineleuco compounds, phenazineleuco compounds, and leucotriarylmethane compounds.

The leucoquinone compounds are preferably compounds having a partial structure represented by any of the following formulae (6) to (10).

Formula (6)

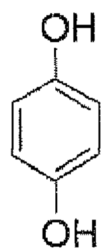

Formula (7)

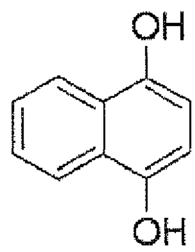

Formula (8)

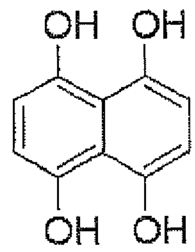

Formula (9)

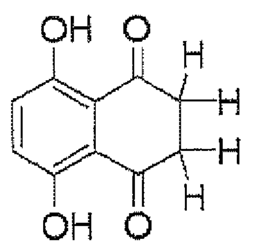

Formula (10)

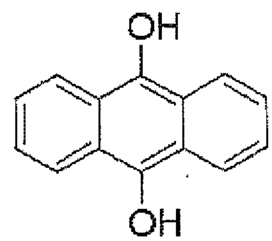

In the formulae, of the hydrogen atoms bonding to carbon atoms and not expressed clearly, one or more hydrogen atoms may be substituted with a substituent. The preferred examples of the substituents include an amino group, an alkylamino group, an arylamino group, an acylamino group and a benzoylamino group, and these groups may further have a substituent. The oxygen atoms of the hydroxyl groups may be substituted with other groups exclusive of bonding hydrogen atoms. The preferred examples of the substituents of the oxygen atoms of the hydroxyl groups include an alkylamino group, an arylamino group, and a benzoyl group. The oxygen atoms of the hydroxyl groups may also be substituted with metal ions, e.g., a sodium ion and a potassium ion are preferably exemplified.

The preferred specific examples of the leucoquinone compounds for use in the invention are shown below, but the invention is not restricted thereto.

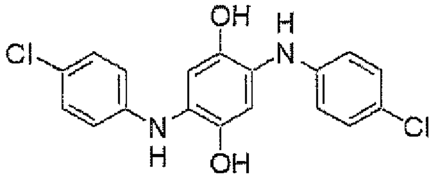

Lq-1

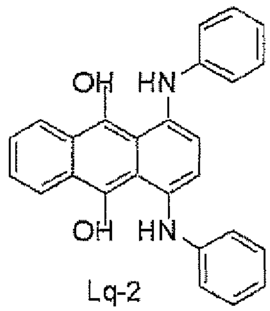

Lq-2

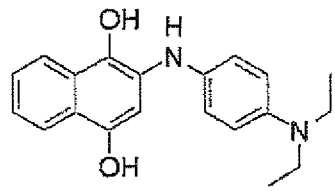

Lq-3

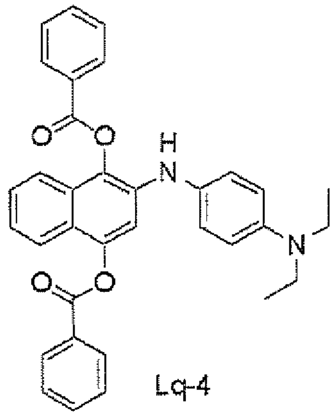

Lq-4

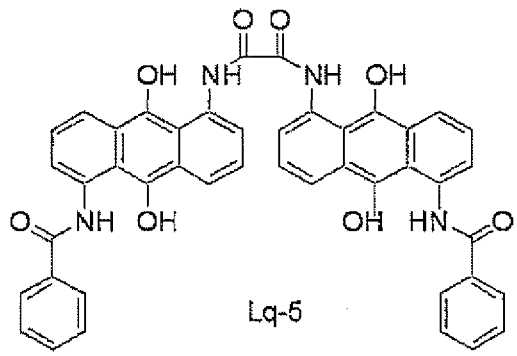

Lq-5

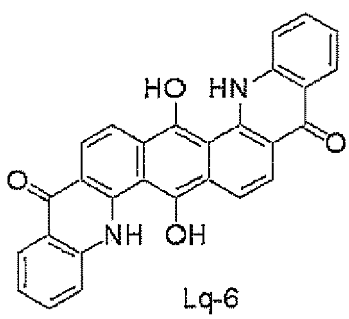

Lq-6

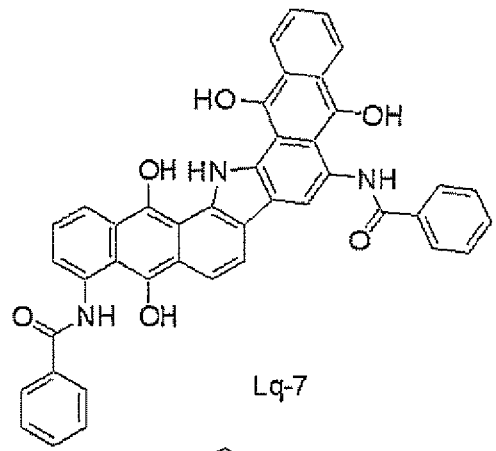

Lq-7

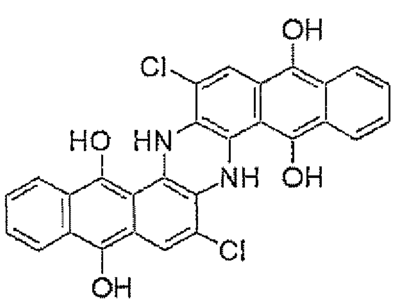

Lq-8

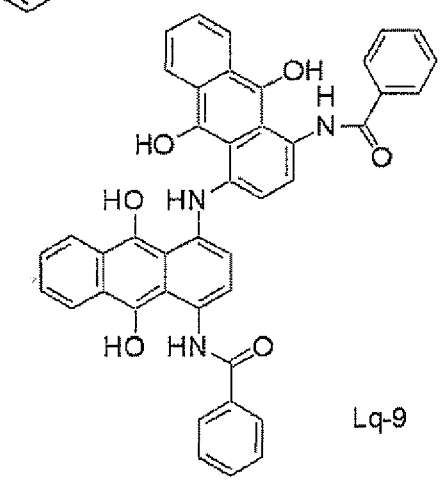

Lq-9

The thiazineleuco compounds, oxazineleuco compounds, and phenazineleuco compounds in the invention

are preferably compounds having a partial structure represented by the following formula (11) or (12).

Formula (11)

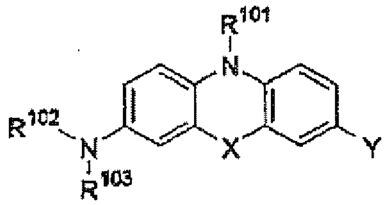

Formula (12)

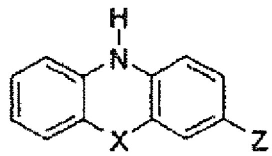

X = S, O, N-$R^{104}$

In the formulae, X represents a sulfur atom, an oxygen atom or a substituted nitrogen atom; each of $R^{101}$, $R^{102}$, $R^{103}$ and $R^{104}$ represents a hydrogen atom or a substituent; and each of Y and Z represents a substituent.

$R^{101}$ in formula (11) preferably represents an arylcarbonyl group, an alkylcarbonyl group, an alkoxycarbonyl group, an alkylsulfonyl group, an arylsulfonyl group, or an alkylaminocarboxy group, more preferably an arylcarbonyl group, an alkylcarbonyl group, or an alkoxycarbonyl group, and especially preferably a benzoyl group, an acyl group or a t-butoxycarbonyl group.

$R^{101}$ in formula (11) may have a substituent, and the examples of the substituents preferably include an alkyl group, an alkenyl group, a cycloalkyl group, an aryl group, a heterocyclic group, an alkynyl group, a halogen atom, an amino group, a cyano group, a nitro group, a hydroxyl group, a mercapto group, a carboxyl group, a sulfo group, a phosphonic acid group, an acyl group, an alkoxy group, an aryloxy group, an alkylthio group, an arylthio group, an alkylsulfonyl group, an arylsulfonyl group, a sulfamoyl group, a carbamoyl group, an acylamino group, an imino group, an acyloxy group, an alkoxycarbonyl group, and a carbamoylamino group, and more preferably an alkyl group, an aryl group, a heterocyclic group, a halogen atom, a cyano group, a carboxyl group, a sulfo group, an alkoxy group, a sulfamoyl group, a carbamoyl group, and an alkoxycarbonyl group.

Each of $R^{102}$ and $R^{103}$ in formula (11) preferably represents a hydrogen atom, an alkyl group having a C number of 1 to 20, an aryl group, an alkylcarbonylamino group, or an arylcarbonylamino group, more preferably an alkyl group having a C number of 1 to 10 or an aryl group, and most preferably an alkyl group having a C number of 1 to 8. Each of $R^{102}$ and $R^{103}$ in formula (11) may further have a substituent, and the substituents of $R^{101}$ may be exemplified as the examples of the substituents.

$R^{104}$ in formula (11) preferably represents an alkyl group having a C number of 1 to 20 or an aryl group, more preferably an alkyl group having a C number of 1 to 10 or an aryl group, and most preferably an alkyl group having a C number of 1 to 8 or a phenyl group. $R^{104}$ in formula (11) may further have a substituent, and the substituents of $R^{101}$ may be exemplified as the examples of the substituents.

Y in formula (11) preferably represents a hydroxyl group, an amino group, an alkylamino group, a dialkylamino group, an alkylcarbonylamino group, an arylcarbonylamino group, an arylcarboxy group, an alkylcarboxy group, or a disubstituted methyl group, and more preferably a dialkylamino group, an alkylcarbonylamino group, or an arylcarbonylamino group.

Y in formula (11) may further have a substituent, and the substituents of $R^{101}$ may be exemplified as the examples of the substituents.

Z in formula (12) preferably represents an amino group, an alkylamino group, a dialkylamino group, an alkylcarbonylamino group, an arylcarbonylamino group, an arylcarboxy group, an alkylcarboxy group, or a disubstituted methyl group, more preferably an arylcarbonylamino group or a disubstituted methyl group, and most preferably a phenylamino group or a dicyanomethyl group. Z in formula (12) may further have a substituent, and the substituents of $R^{101}$ may be exemplified as the examples of the substituents.

The preferred specific examples of the leucoquinone compounds for use in the invention are shown below, but the invention is not restricted thereto.

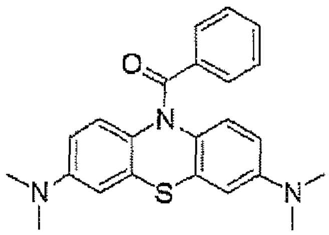
Lt-1

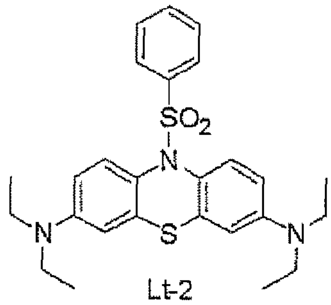
Lt-2

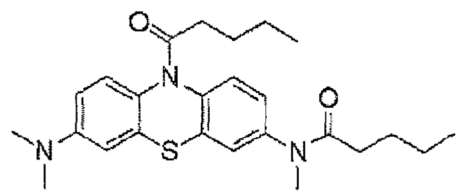
Lt-3

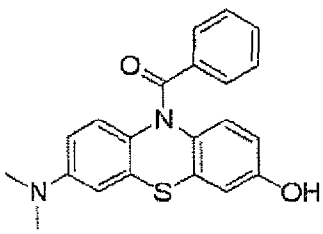
Lt-4

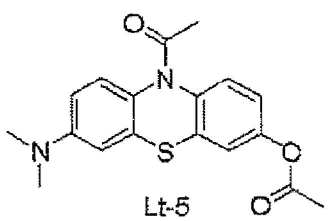
Lt-5

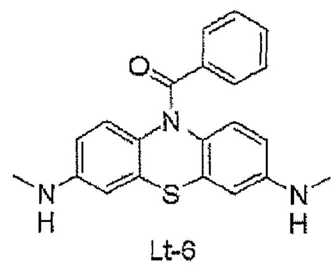
Lt-6

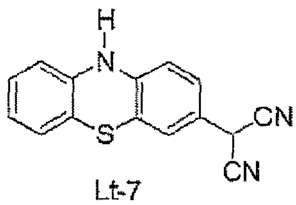
Lt-7

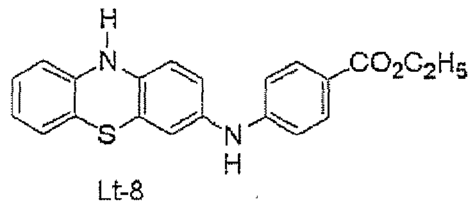
Lt-8

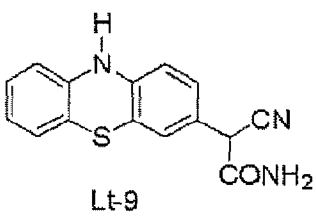
Lt-9

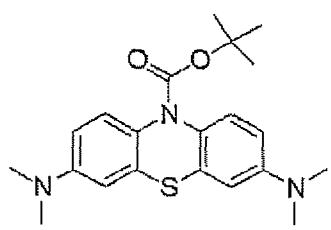
Lt-10

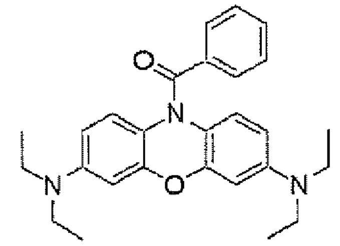

Lo-1

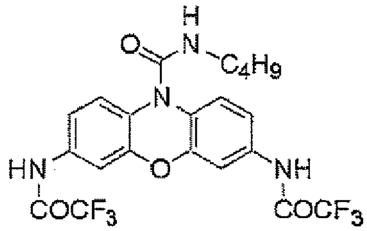

Lo-2

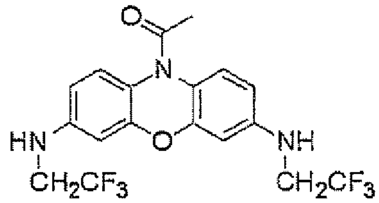

Lo-3

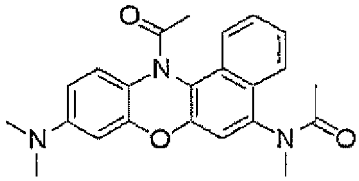

Lo-4

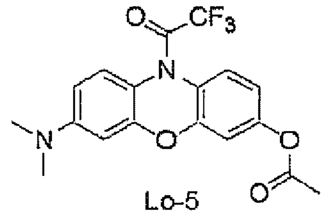

Lo-5

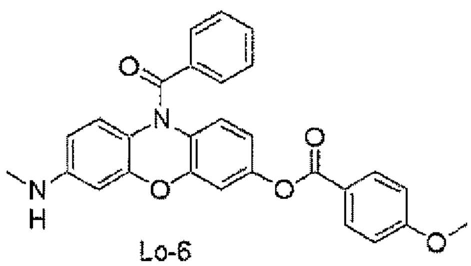

Lo-6

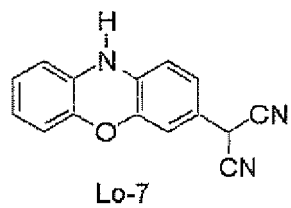

Lo-7

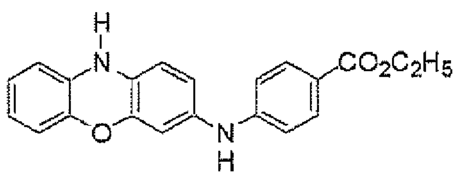

Lo-8

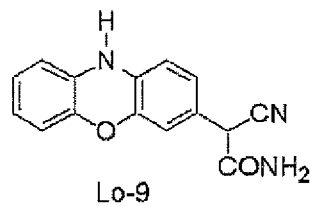

Lo-9

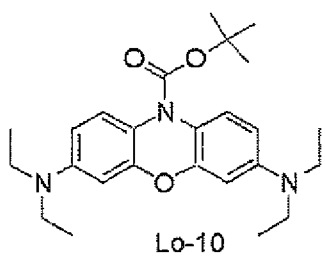

Lo-10

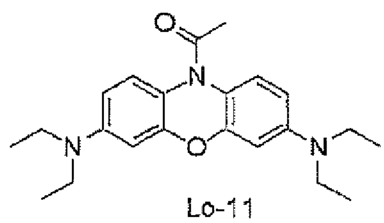

Lo-11

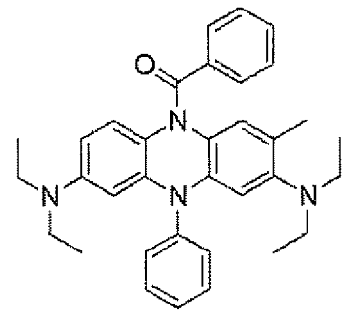
Lp-1

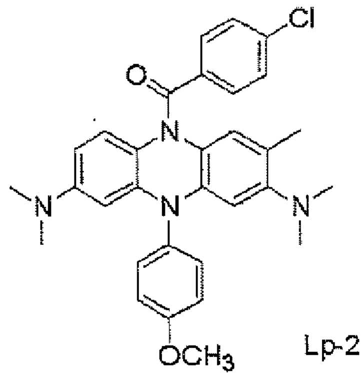
Lp-2

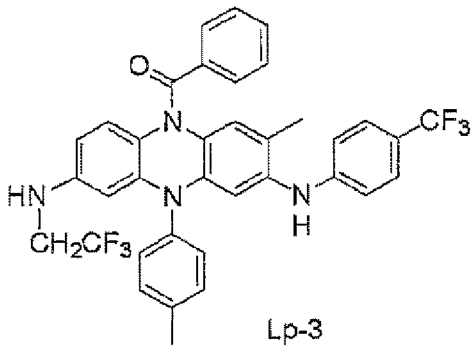
Lp-3

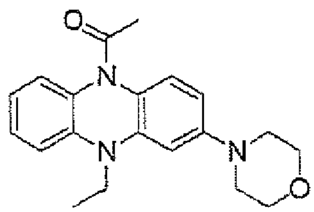
Lp-4

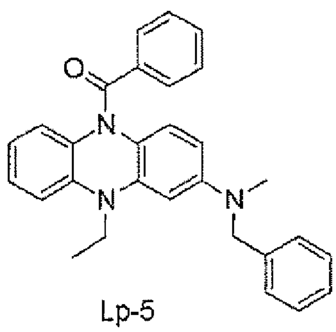
Lp-5

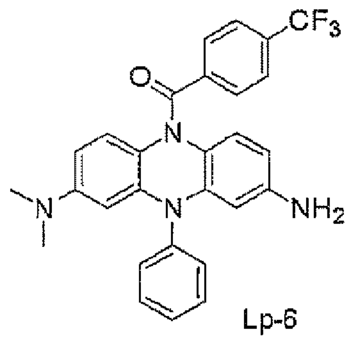
Lp-6

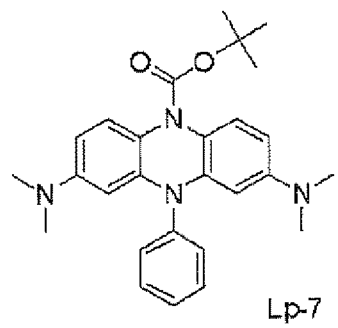
Lp-7

The leucotriarylmethane compounds are preferably compounds having a partial structure represented by the following formula (13).

Formula (13)

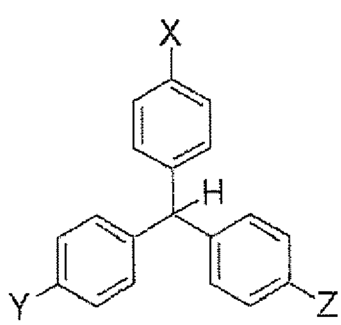

In formula (13), X represents a hydrogen atom, an amino group, an alkylamino group, a dialkylamino group, an arylamino group, a diarylamino group, or a hydroxyl group; and each of Y and Z independently represents an ammo group, an alkylamino group, a dialkylamino group, an arylamino group, a diarylamino group, or a hydroxyl group. X in formula (13) preferably represents a hydrogen atom, an alkylamino group, a dialkylamino group, or a diarylamino group, and more preferably a dialkylamino group or a diarylamino group. Each of Y and Z in formula (13) preferably represents an alkylamino group, a dialkylamino group, or a diarylamino group, and more preferably a dialkylamino group or a diarylamino group.

Each of X, Y and Z in formula (13) may further have a substituent, and the substituents in formula (3) may be exemplified as the examples of the substituents.

In formula (13), the carbon atoms of the phenyl group may be substituted with substituents exclusive of bonding hydrogen atoms, and the substituents of $R^{101}$ in formula (11) may be exemplified as the examples of the substituents.

The preferred specific examples of the leucotriarylmethane compounds for use in the invention are shown below, but the invention is not restricted thereto.

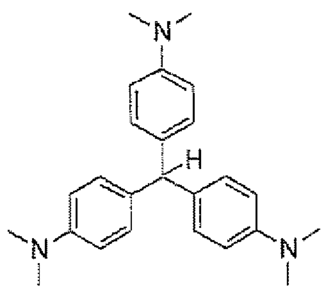
Lm-1

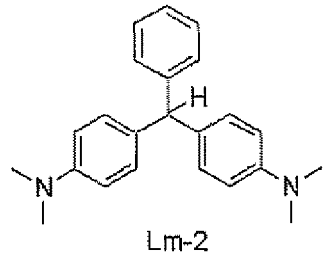
Lm-2

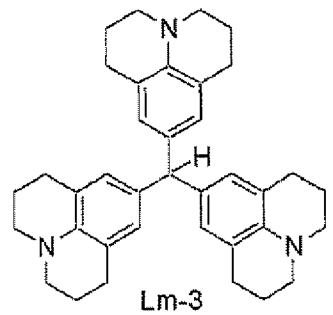
Lm-3

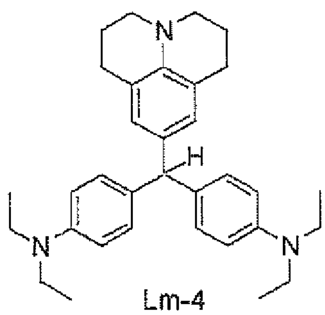
Lm-4

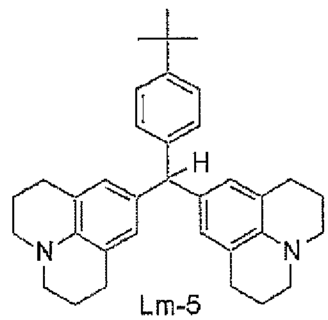
Lm-5

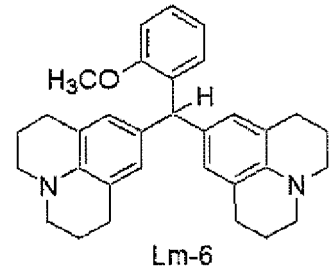
Lm-6

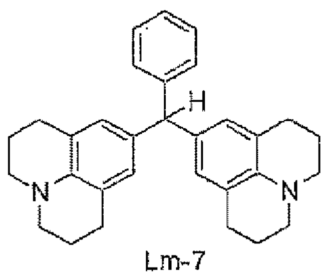
Lm-7

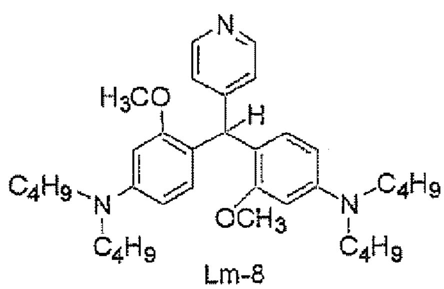
Lm-8

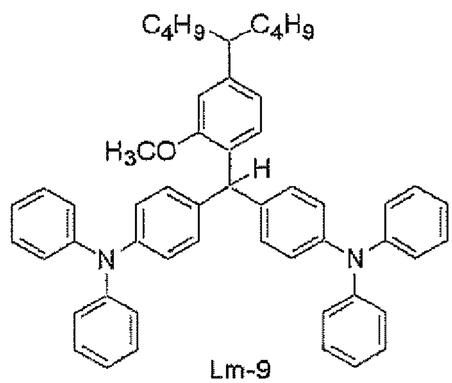
Lm-9

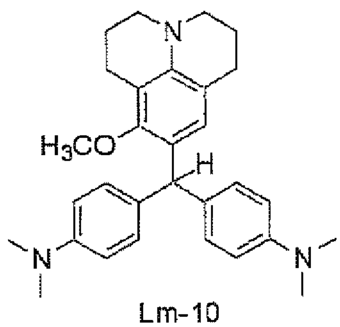

Lm-10

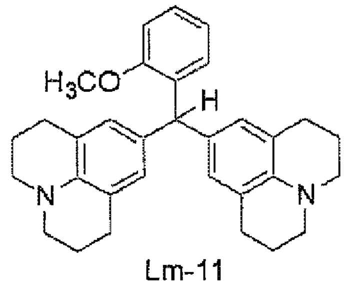

Lm-11

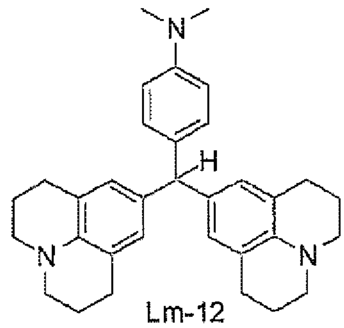

Lm-12

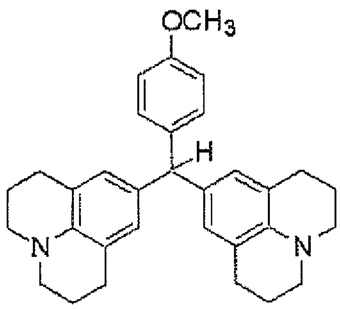

Lm-13

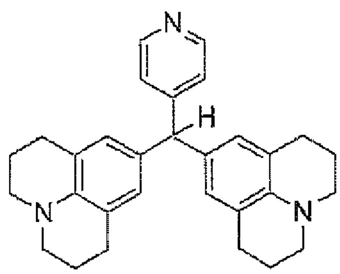

Lm-14

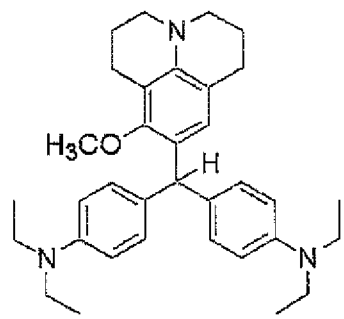

Lm-15

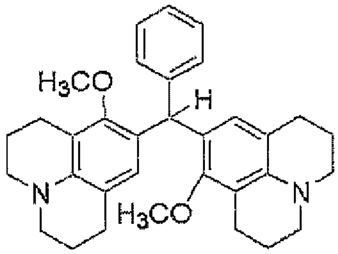

Lm-16

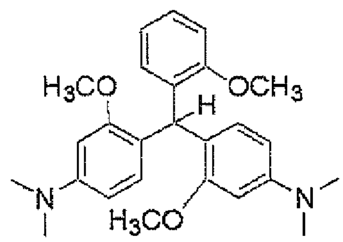

Lm-17

(D) Fluorescence quencher precursors capable of generating a fluorescence quencher by reduction

The fluorescence quencher precursors are not especially restricted so long as they arc compounds capable of generating a fluorescence quencher by direct electron transfer or energy transfer from the two-photon excitation state to thereby reduce the precursors, but it is preferred to contain a fluorescence quencher precursor represented by the following formula (A).

Formula (A) A1-PD

In formula (A), A1 and PD form a covalent bond, A1 is an organic compound site having a function of breaking the covalent bond with PD by electron transfer or energy transfer with the excitation state of the two-photon absorption compound, and PD is an organic compound site having a characteristic that the absorption forms are different between the time when the covalent bond is formed with A1 and when the covalent bond with A1 is broken and released.

A1 is more preferably an organic compound site having a function of breaking the covalent bond with PD by electron transfer with the excitation state of the two-photon absorption compound.

PD is preferably a group consisting of any of dissociation type dyes such as dissociation type azo dyes, dissociation type azomethine dyes, dissociation type oxonol dyes, and dissociation type arylidene dyes, or dyes capable of becoming what is called "a leuco dye" such as triphenylmethane dyes and xanthenes (fluoran) dyes, and linking with A1 by a covalent bond on the chromophore.

PD is more preferably any of dissociation type azo dyes, dissociation type azomethine dyes, dissociation type

oxonol dyes, and dissociation type arylidene dyes.

It is preferred that PD is colorless or shows a light color, and absorption is at the short wavelength side when bonding to A1 by a covalent bond, and is strongly colored or absorption is shifted to the longer wavelength side when the covalent bond with A1 is broken and released.

The preferred specific examples of PD are shown below, but the invention is not restricted thereto.

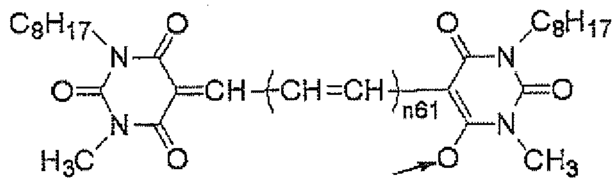

| | $n_{61}$ |
|---|---|
| PD-1 | 1 |
| PD-2 | 2 |
| PD-3 | 3 |

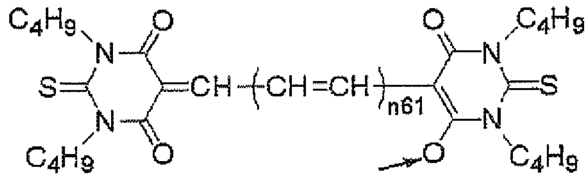

| | $n_{61}$ |
|---|---|
| PD-4 | 0 |
| PD-5 | 1 |
| PD-6 | 2 |

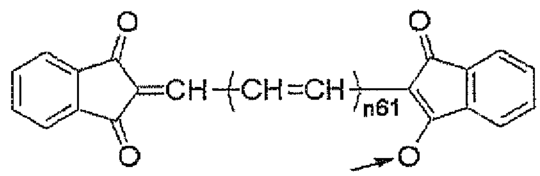

| | $n_{61}$ |
|---|---|
| PD-7 | 0 |
| PD-8 | 1 |
| PD-9 | 2 |

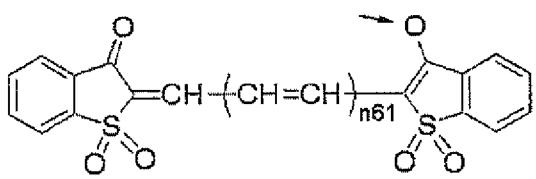

| | $n_{61}$ |
|---|---|
| PD-10 | 0 |
| PD-11 | 1 |
| PD-12 | 2 |

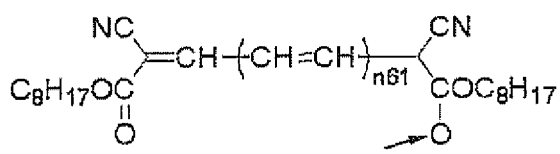

| | $n_{61}$ |
|---|---|
| PD-13 | 0 |
| PD-14 | 1 |
| PD-15 | 2 |

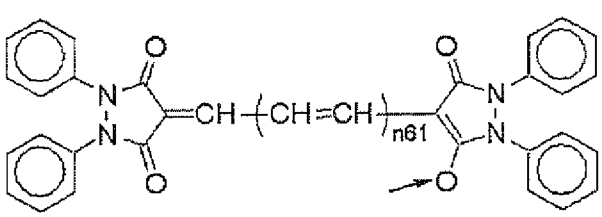

| | $n_{61}$ |
|---|---|
| PD-16 | 0 |
| PD-17 | 2 |
| PD-18 | 3 |

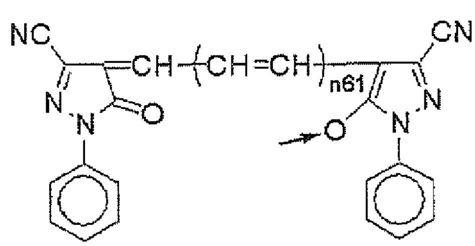

| | $n_{61}$ |
|---|---|
| PD-19 | 1 |
| PD-20 | 2 |

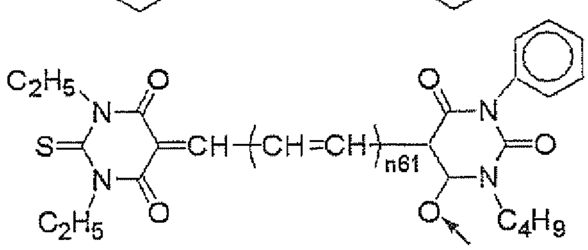

| | $n_{61}$ |
|---|---|
| PD-21 | 0 |
| PD-22 | 1 |

PD-23

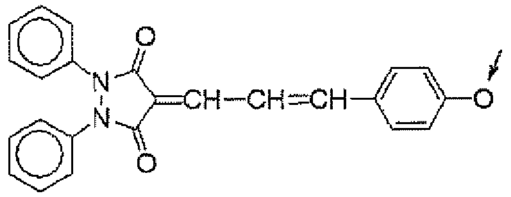

PD-24

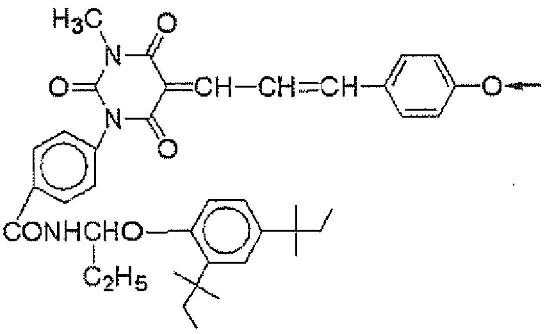

PD-25

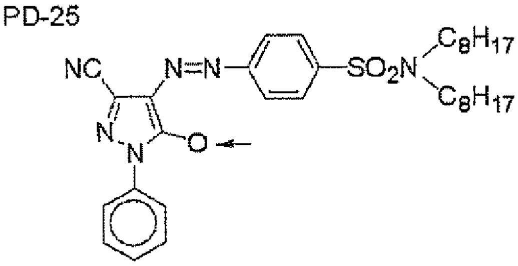

PD-26

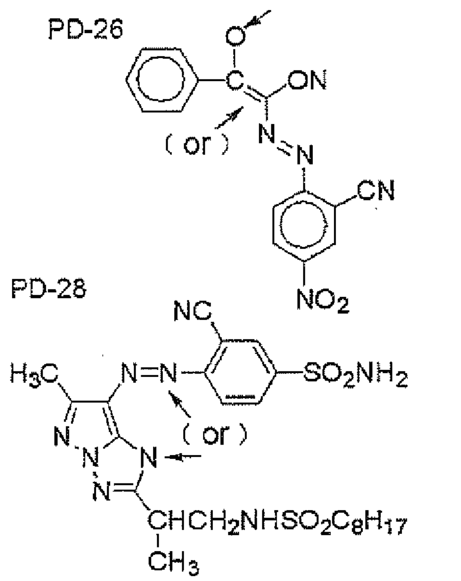

PD-28

PD-27

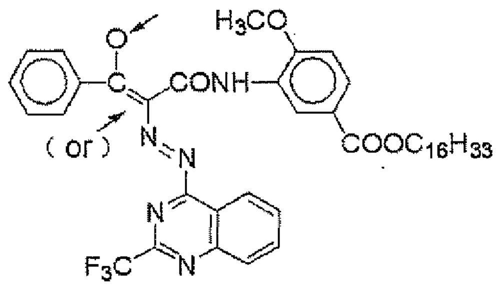

PD-29

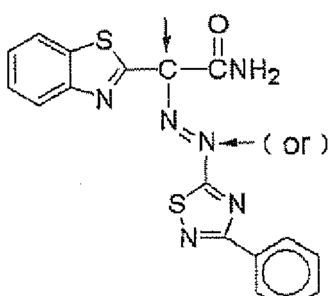

PD-30

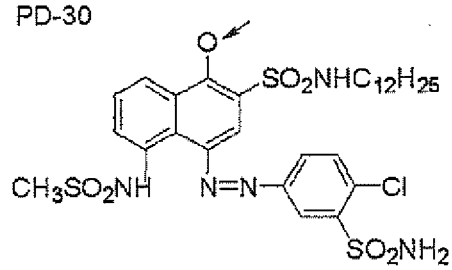

PD-31

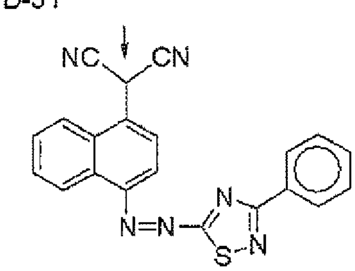

PD-32

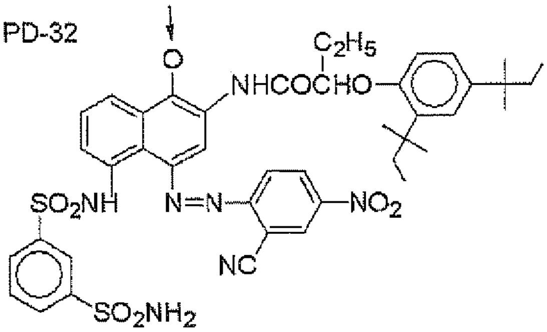

PD-33

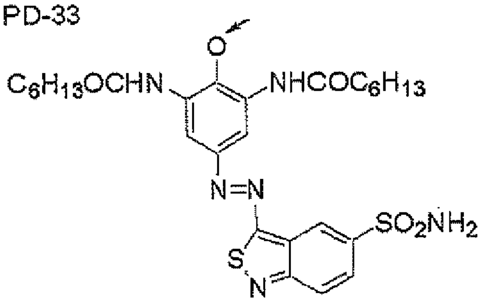

PD-34

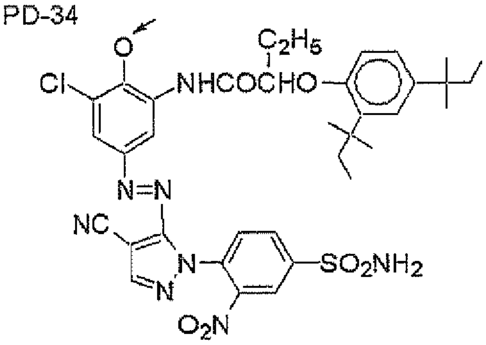

PD-35

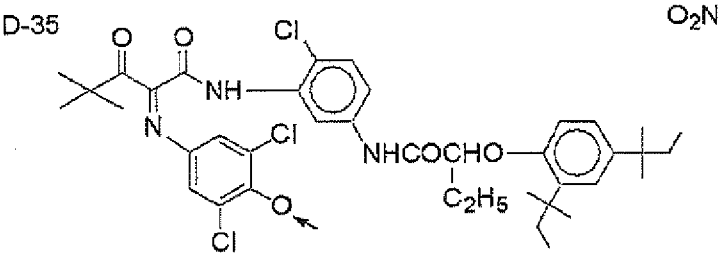

PD-36

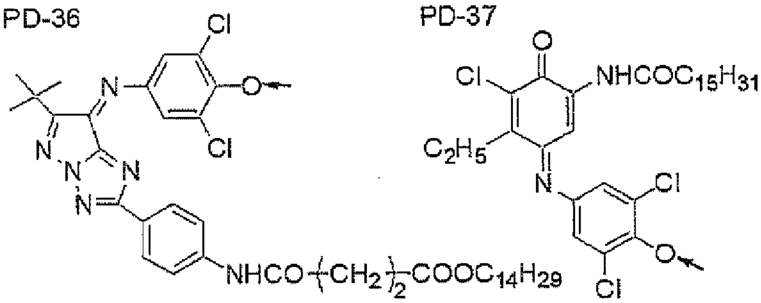

PD-37

PD-38

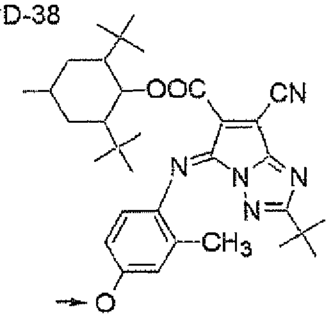

PD-39

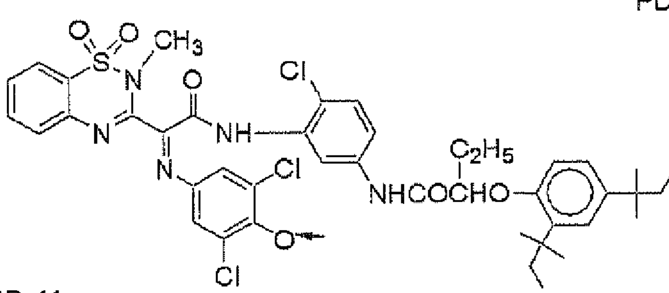

PD-40

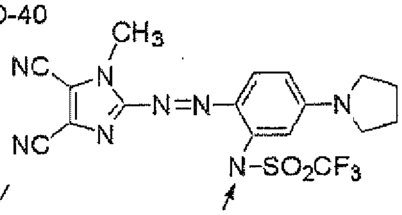

PD-41

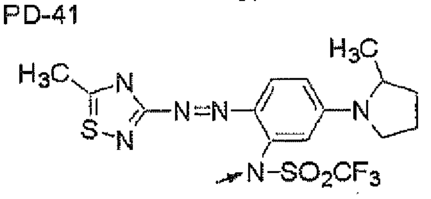

PD-42

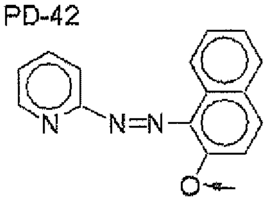

PD-43

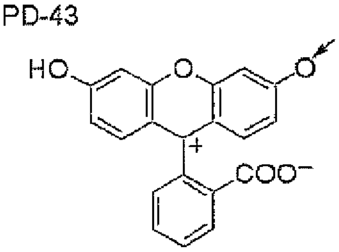

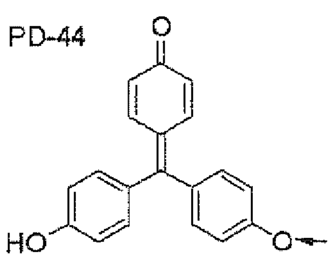

PD-44

PD-45

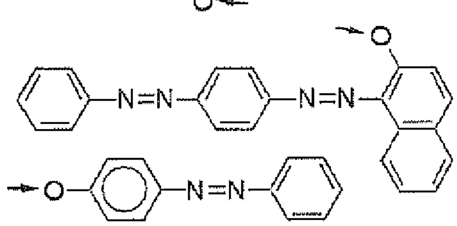

PD-46

PD-47

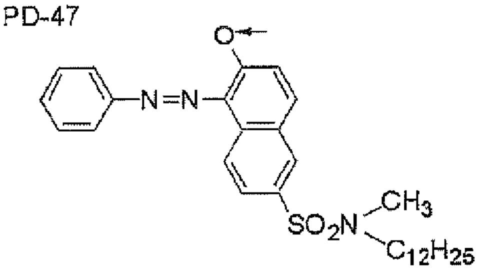

PD-48

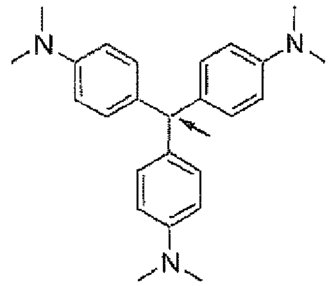

PD-49

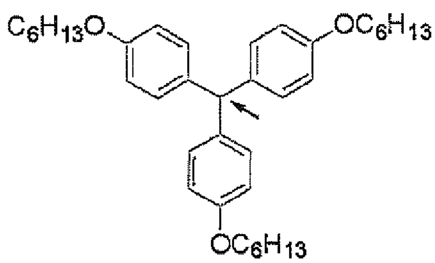

PD-50

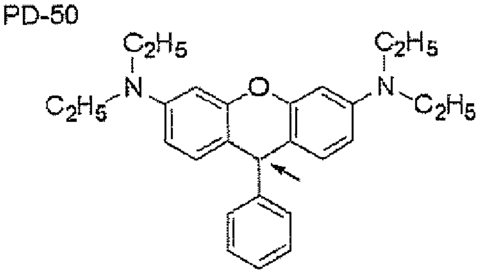

PD-51

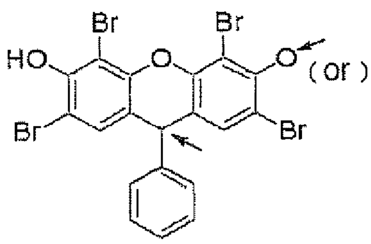

( or )

PD-52

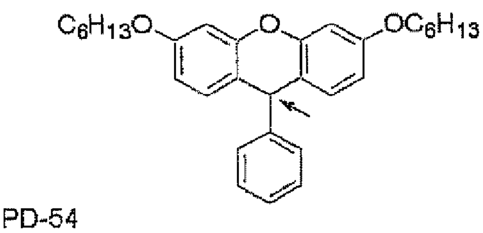

PD-53

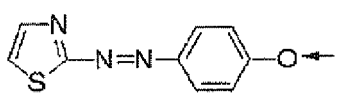

PD-54

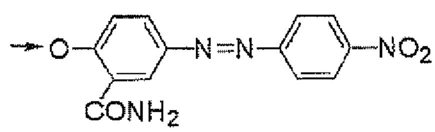

PD-55

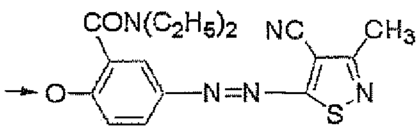

PD-56

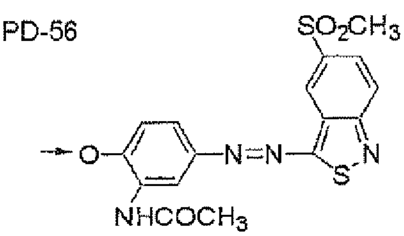

PD-57

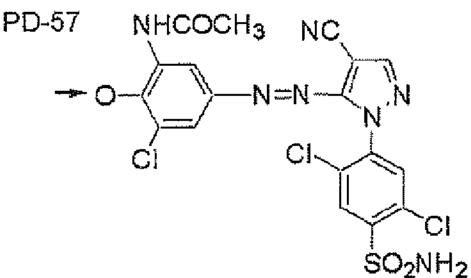

PD-58

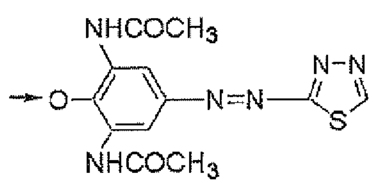

PD-59

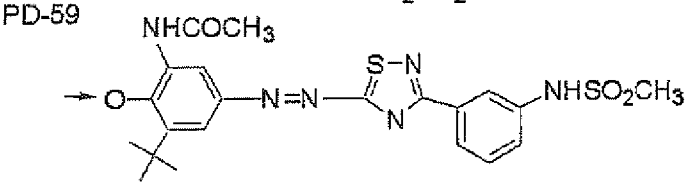

When PD forms a covalent bond with A1, the covalent bond may be formed anywhere on A1 so long as it is

on a dye chromophore, but it is preferred that the covalent bond with A1 is formed on the atoms shown with arrows in the above formulae.

The fluorescence quencher precursor represented by formula (A) is more preferably represented by any of the following formulae (33-1) to (33-6).

Formula (33-1)

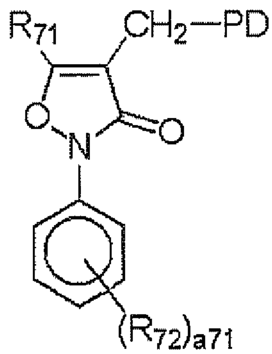

Formula (33-2)

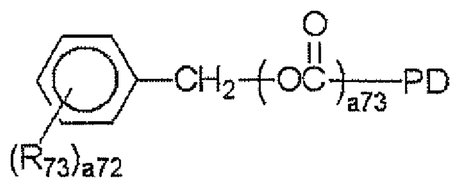

Formula (33-3)

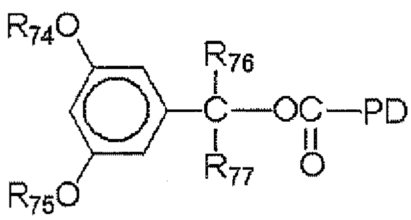

Formula (33-4)

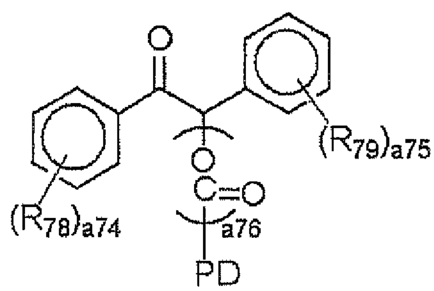

Formula (33-5)

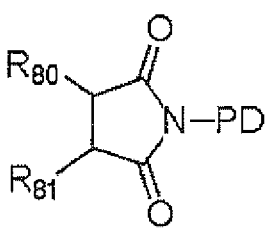

Formula (33-6)

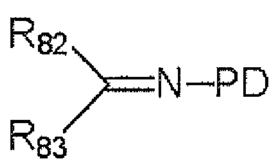

In formulae (33-1) to (33-6), PD has the same meaning as in formula (A).

In formula (33-1), $R_{71}$ represents a hydrogen atom or a substituent (preferred substituents are the same as the substituents exemplified in $R_{94}$ and $R_{95}$ above), preferably an alkyl group or an aryl group, and more preferably a t-butyl group,

$R_{72}$ represents a substituent (preferred substituents are the same as the substituents exemplified in $R_{94}$ and $R_{95}$ above), preferably an electron-withdrawing group, and more preferably a nitro group, a sulfamoyl group, a carbamoyl group, an alkoxycarbonyl group, a cyano group, or a halogen atom. Each of a71 independently represents an integer of 0 to 5, and when a71 is 2 or more, a plurality of $R_{72}$'s may be the same with or different from every other $R_{72}$, and they may be linked to each other to form a ring. a71 is preferably 1 or 2, and it is preferred that $R_{72}$ is substituted on the 2- or 4-position.

In formula (33-2), $R_{73}$ represents a substituent (preferred substituents are the same as the substituents exem-

plified in $R_{94}$ and $R_{95}$ above), preferably an electron-withdrawing group, more preferably a nitro group, a sulfamoyl group, a carbamoyl group, an alkoxycarbonyl group, a cyano group, or a halogen atom, and still more preferably a nitro group. Each of a72 independently represents an integer of 0 to 5, and when a72 is 2 or more, a plurality of $R_{73}$'s may be the same with or different from every other $R_{73}$, and they may be linked to each other to form a ring. a72 is preferably 1 or 2, and preferably $R_{73}$ is substituted on the 2-position when a72 is 1, more preferably substituted on the 2- or 4-position, or the 2- or 6-position when a72 is 2, and still more preferably on the 2- or 6-position.

a73 represents 0 or 1.

In formula (33-3), each of $R_{74}$ to $R_{77}$ independently represents an alkyl group, and preferably all of $R_{74}$ to $R_{77}$ represent a methyl group.

In formula (33-4), each of $R_{78}$ and $R_{79}$ independently represents a substituent (the examples of preferred substituents include, for example, an alkyl group (preferably having a C number of 1 to 20, e.g., methyl, ethyl, n-propyl, isopropyl, n-butyl, n-pentyl, benzyl, 3-sulfopropyl, 4-sulfobutyl, carboxymethyl, 5-carboxypentyl), an alkenyl group (preferably having a C number of 2 to 20, e.g., vinyl, allyl, 2-butenyl, 1,3-butadienyl), a cycloalkyl group (preferably having a C number of 3 to 20, e.g., cyclopentyl, cyclohexyl), an aryl group (preferably having a C number of 6 to 20, e.g., phenyl, 2-chlorophenyl, 4-methoxyphenyl, 3-methylphenyl, 1-naphthyl), a heterocyclic group (preferably having a C number of 1 to 20, e.g., pyridyl, thienyl, furyl, thiazolyl, imidazolyl, pyrazolyl, pyrrolidino, piperidino, morpholino), an alkynyl group (preferably having a C number of 2 to 20, e.g., ethynyl, 2-propynyl, 1,3-butadiynyl, 2-phenylethynyl), a halogen atom (e.g., F, Cl, Br, I), an amino group (preferably having a C number of 0 to 20, e.g., amino, dimethylamino, diethylamino, dibutylamino, anilino), a cyano group, a nitro group, a hydroxyl group, a mercapto group, a carboxyl group, a sulfo group, a phosphonic acid group, an acyl group (preferably having a C number of 1 to 20, e.g., acetyl, benzoyl, salicyloyl, pivaloyl), an alkoxy group (preferably having a C number of 1 to 20, e.g., methoxy, butoxy, cyclohexyloxy), an aryloxy group (preferably having a C number of 6 to 26, e.g., phenoxy, 1-naphthoxy), an alkylthio group (preferably having a C number of 1 to 20, e.g., methylthio, ethylthio), an arylthio group (preferably having a C number of 6 to 20, e.g., phenylthio, 4-chlorophenylthio), an alkylsulfonyl group (preferably having a C number of 1 to 20, e.g., methanesulfonyl, butanesulfonyl), an arylsulfonyl group (preferably having a C number of 6 to 20, e.g., benzenesulfonyl, paratoluenesulfonyl), a sulfamoyl group (preferably having a C number of 0 to 20, e.g., sulfamoyl, N-methylsulfamoyl, N-phenylsulfamoyl), a carbamoyl group (preferably having a C number of 1 to 20, e.g., carbamoyl, N-methylcarbamoyl, N, N-dimethylcarbamoyl, N-phenylcarbamoyl), an acylamino group (preferably having a C number of 1 to 20, e.g., acetylamino, benzoylamino), an imino group (preferably having a C number of 2 to 20, e.g., phthalimino), an acyloxy group (preferably having a C number of 1 to 20, e.g., acetyloxy, benzoyloxy), an alkoxycarbonyl group (preferably having a C number of 2 to 20, e.g., methoxycarbonyl, phenoxycarbonyl), and a carbamoylamino group

(preferably having a C number of 1 to 20, e.g., carbamoylamino, N-methylcarbamoylamino, N-phenylcarbamoylamino), and as more preferred substituents, an alkyl group, an aryl group, a heterocyclic group, a halogen atom, an amino group, a cyano group, a nitro group, a carboxyl group, a sulfo group, an alkoxy group, a alkylthio group, an arylsulfonyl group, a sulfamoyl group, a carbamoyl group, and an alkoxycarbonyl group are exemplified.). $R_{79}$ preferably represents an alkoxy group, and more preferably a methoxy group. Each of a74 and a75 independently represents an integer of 0 to 5. When each of a74 and a75 is 2 or more, a plurality of $R_{78}$'s and $R_{79}$'s may be the same with or different from every other $R_{78}$ and $R_{79}$, and they may be linked to each other to form a ring. Each of a74 and a75 preferably represents an integer of 0 to 2. a74 is more preferably 0 or 1, and a75 is more preferably 2. When a75 is 2, preferably $R_{79}$ is substituted on the 3- or 5-position.

a76 represents 0 or 1.

In formula (33-5), each of $R_{80}$ and $R_{81}$ independently represents a hydrogen atom or a substituent (preferred substituents are the same as the substituents exemplified in $R_{94}$ and $R_{95}$ above), and $R_{80}$ and $R_{81}$ may be linked to each other to form a ring, preferably a benzene ring or a norbornene ring. When $R_{80}$ and $R_{81}$ do not form a ring, it is preferred that both $R_{80}$ and $R_{81}$ represent a hydrogen atom.

In formula (33-6), each of $R_{82}$ and $R_{83}$ independently represents a substituent (preferred substituents are the same as the substituents exemplified in $R_{94}$ and $R_{95}$ above), preferably an alkyl group, an alkenyl group or an aryl group. It is preferred that $R_{82}$ and $R_{83}$ are linked to each other to form a ring, preferably a fluorene ring, a dibenzopyran ring, or a tetrahydronaphthalene ring.

The fluorescence quencher precursor represented by formula (A) is preferably represented by any of formulae (33-1), (33-2) and (33-4).

The preferred examples of the fluorescence quencher precursors represented by any of formulae (33-1) to (33-6) for use in the invention are shown below, but the invention is not restricted thereto.

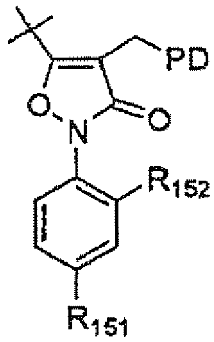

| | $R_{151}$ | $R_{152}$ | PD |
|---|---|---|---|
| E-1 | $-CONHC_2H_5$ | $-NO_2$ | PD-2 |
| E-2 | $-SO_2N(C_2H_5)_2$ | " | PD-9 |
| E-3 | $-CONHC_2H_5$ | " | PD-12 |
| E-4 | " | " | PD-23 |
| E-5 | " | " | PD-24 |
| E-6 | $-SO_2N(C_2H_5)_2$ | " | PD-25 |
| E-7 | $-CONHC_{16}H_{33}$ | -H | PD-26 |
| E-8 | $-OC_8H_{17}$ | -Cl | PD-28 |
| E-9 | $-CONHC_2H_5$ | -CN | PD-36 |
| E-10 | $-C_8H_{17}$ | $-NO_2$ | PD-37 |
| E-11 | $-CONHC_2H_5$ | " | PD-33 |
| E-12 | " | " | PD-34 |
| E-13 | " | " | PD-30 |
| E-1 4 | " | " | PD-32 |
| E-15 | " | " | PD-35 |
| E-16 | " | " | PD-55 |
| | E-17 " | " | PD-59 |
| E-1 8 | " | " | PD-56 |
| | E-19 " | " | PD-58 |

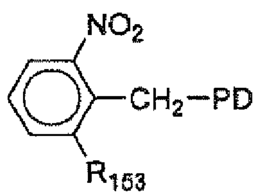

| | $R_{153}$ | PD |
|---|---|---|
| E-20 | H | PD-21 |
| E-21 | " | PD-11 |
| E-22 | $-NO_2$ | PD-6 |
| E-23 | H | PD-17 |
| E-24 | " | PD-23 |
| E-25 | $-NO_2$ | PD-24 |
| E-26 | H | PD-30 |
| E-27 | $-NO_2$ | PD-33 |
| E-28 | H | PD-29 |
| E-29 | $-NO_2$ | PD-38 |
| E-30 | H | PD-39 |
| E-31 | " | PD-55 |
| E-32 | $-NO_2$ | PD-56 |
| E-33 | H | PD-49 |
| E-34 | " | PD-57 |

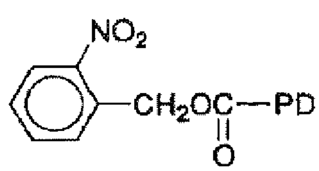

| | PD |
|---|---|
| E-35 | PD-5 |
| E-36 | PD-30 |
| E-37 | PD-36 |
| E-38 | PD-23 |
| E-39 | PD-59 |
| E-40 | PD-44 |

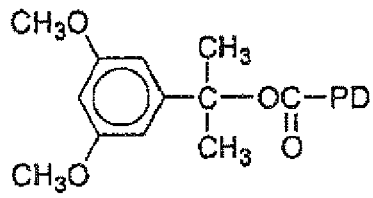

| | PD |
|---|---|
| E-41 | PD-17 |
| E-42 | PD-24 |
| E-43 | PD-31 |
| E-44 | PD-40 |
| E-45 | PD-45 |

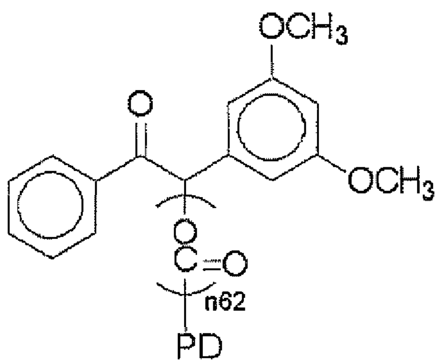

| | PD | $n_{62}$ |
|---|---|---|
| E-46 | PD-15 | 0 |
| E-47 | PD-32 | 0 |
| E-48 | PD-37 | 0 |
| E-49 | PD-51 | 1 |

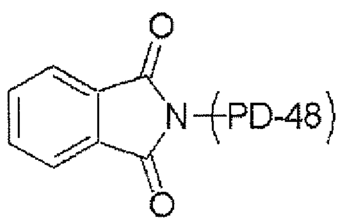

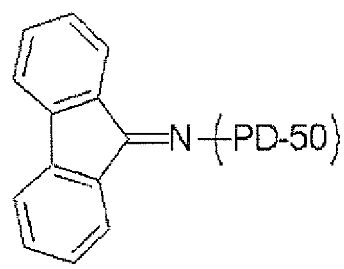

When the recording material in the invention contains at least the fluorescence quencher precursor represented by formula (A) or any of formulae (33-1) to (33-6), it is also preferred for the recording material of the invention to further contain a base according to necessity for the purpose of dissociating a dissociation type dye to be formed. The base may be either an inorganic base or an organic base, and preferably, for example, alkylamines, anilines, imidazoles, pyridines, carbonates, hydroxide salts, carboxylates, and metal alkoxide are exemplified. Alternatively, polymers containing the bases thereof may also be preferably used.

A two-photon absorption compound and a fluorescence quencher precursor may be an integral form comprising a site forming a two-photon excitation state by two-photon absorption and a site capable of generating a fluorescence quencher by energy transfer or electron transfer between the site of two-photon excitation state of the compound in one molecule, or may be a monomolecular form comprising each molecule combined.

The two-photon absorption optical recording material of the invention may be prepared according to ordinary methods. For example, the above-described essential components and ordinary components may be prepared as they are or by adding a solvent, if necessary.

The examples of the solvents include ketone series solvents, e.g., methyl ethyl ketone, methyl isobutyl ketone, acetone, cyclohexanone, etc., ester series solvents, e.g., ethyl acetate, butyl acetate, ethylene glycol diacetate, ethyl lactate, cellosolve acetate, etc., hydrocarbon series solvents, e.g., cyclohexane, toluene, xylene, etc., ether series solvents, e.g., tetrahydrofuran, dioxane, diethyl ether, etc., cellosolve series solvents, e.g., methyl cellosolve, ethyl cellosolve, butyl cellosolve, dimethyl cellosolve, etc., alcohol series solvents, e.g., methanol, ethanol, n-propanol, 2-propanol, n-butanol, diacetone alcohol, etc., fluorine series solvents, e.g., 2,2,3,3-tetrafluoropropanol, etc., halogenated hydrocarbon series solvents, e.g., dichloromethane, chloroform, 1,2-dichloroethane, etc., amide series solvents, e.g., N,N-dimethylformamide, etc., and nitrile series solvents, e.g., acetonitrile, propionitrile, etc.

The two-photon absorption optical recording material of the invention can be directly coated on a substrate with a spin coater, a roll coater or a bar coater, or can laminated on a substrate by casting as a film and then according to ordinary methods to thereby obtain the two-photon absorption optical recording material.

Here, "a substrate" means an arbitrary natural or synthetic support, preferably a flexible or rigid film, sheet, or the one that can exist in the form of a plate.

The examples of preferred substrates include polyethylene terephthalate, polyethylene terephthalate undercoated with a resin, polyethylene terephthalate subjected to flame treatment or electrostatic discharge treatment, cellulose acetate, polycarbonate, polymethyl methacrylate, polyester, polyvinyl alcohol, glass, etc.

The solvents used can be removed by evaporation at drying time. Heating and decompression may be used in evaporation removal.

Further, a protective layer may be provided on a two-photon absorption optical recording material for oxygen exclusion. The protective layer of a plastic film or plate such as polyolefin, e.g., polypropylene or polyethylene, polyvinyl chloride, polyvinylidene chloride, polyvinyl alcohol, polyethylene terephthalate, or a cellophane film, may be stuck by electrostatic adhesion or lamination with an extruder, or may be coated with a solution of the above polymer. Alternatively, a glass plate may be laminated. Further, for increasing air tightness, an adhesive or a liquid substance may be present between the protective layer and the photosensitive layer and/or between the substrate and the photosensitive layer.

Furthermore, the two-photon absorption optical recording material of the invention may have a multilayer structure comprising recording layers containing recording components and non-recording layers not containing recording components laminated alternately. Due to the structure of lamination of the recording layers and non-recording layers laminated alternately, a non-recording layer intervenes between the recording layers, and extension of the recording area in the vertical direction to the recording layer surface is intercepted. Accordingly, even if the recording layer is restricted to the thickness of the wavelength order of irradiating light, it is possible to lessen crosstalk. As a result, not only the thickness of the recording layer itself can be thinned but also layer-to-layer distance including the non-recording layers can be decreased.

The thickness of the recording layer is preferably 30 nm or more and 5,000 mn or less, more preferably 500 nm or more and 2,000 nm or less, and still more preferably 500 nm or more and 1,000 nm or less.

The non-recording layer is a thin layer formed with a material not causing fluctuation in absorption spectrum or light emission spectrum by irradiation of the recording light.

As the materials for use in the non-recording layer, from the viewpoint of easiness in manufacture of the multilayer structure, materials soluble in solvents which do not dissolve the materials used in the recording layer are preferred, and of these materials, transparent polymer materials not having absorption in the visible light region are preferred. As such materials, water-soluble polymers are preferably used.

As the specific examples of the water-soluble polymers, polyvinyl alcohol (PVA), polyvinyl pyridine, polyethylencimine, polyethylene oxide, polypropylene oxide, polyvinyl pyrrolidone, polyacrylamide, polyacrylic acid, sodium polyacrylate, carboxymethyl cellulose, hydroxyethyl cellulose, and gelatin can be exemplified, preferably PVA, polyvinyl pyridine, polyacrylic acid, polyvinyl pyrrolidone, carboxymethyl cellulose, and gelatin, and most preferably PVA.

When a water-soluble polymer is used as the material, the non-recording layer can be formed by dissolving the water-soluble polymer in water and coating the obtained coating solution by a coating method such as spin coating.

The thickness of the non-recording layer is, for reducing the crosstalk between recording layers sandwiching the non-recording layer, and from the viewpoints of the wavelength of the light for use in recording and reproducing, recording power, reproducing power, NA of lens, and recording sensitivity of the recording materials, preferably 1 $\mu$m or more and 50 $\mu$m or less, more preferably 1 $\mu$m or more and 20 $\mu$m or less, and still more preferably 1 $\mu$m or more and 10 $\mu$m or less.

The number of pairs of the alternately laminated recording layers and non-recording layers is preferably in the range of 9 to 200, more preferably in the range of 10 to 100, and still more preferably in the range of 10 to 30, from the viewpoints of the recording capacity required of the two-photon absorption recording medium and the aberration determined by the optics to be used.

Two-photon absorption optical recording-reproduction method:

As described above, in the two-photon absorption optical recording/reading out method in the invention, reproduction is performed by detecting that the fluorescence intensity decreases to the unrecorded part when reproduction light is irradiated by the irreversible chemical reaction by 2-photo absorption in the recording part, specifically by the progress of forming reaction of a fluorescence quencher capable of physically quenching the fluorescence intensity.

It is preferred to use a laser in the recording of the two-photon absorption optical recording material of the

invention. Recording lights for use in the invention are preferably any of ultraviolet rays of wavelengths of 200 to 2,000 nm, visible rays, and infrared rays, more preferably ultraviolet rays of wavelengths of 300 to 1,000 nm, visible rays, or infrared rays, and still more preferably visible rays of wavelengths of 400 to 800 nm, or infrared rays.

Usable lasers are not especially restricted, but specifically a solid state laser and a fiber laser such as Ti-sapphire having oscillation wavelength in the vicinity of center wavelength of 1,000 nm, a semiconductor laser, a solid state laser and a fiber laser having oscillation wavelength in the vicinity of 780 nm, which is also used in CD-R and the like, a semiconductor laser and a solid state laser having oscillation wavelength in the range of 620 to 680 nm, which is also used in CD-R and the like, and a GaN laser having oscillation wavelength in the vicinity of 400 to 415 nm can be preferably used.

In addition to the above, a solid state SHG laser such as a YAG-SHG laser, a semiconductor SHG laser having oscillation wavelength in the visible ray region can also be preferably used.

Lasers for use in the invention may be either a pulse oscillating laser or a CW laser.

The lights for use in reproduction are preferably the above laser rays. Further, it is more preferred to perform reproduction with the same laser as used in recording even if the powers or pulse shapes are the same or different.

A carbon arc, a high pressure mercury lamp, a xenon lamp, a metal halide lamp, a fluorescent lamp, a tungsten lamp, an LED, an organic LE are also exemplified. For irradiating the light at a specific wavelength region, if necessary, it is also preferred to use a sharp cut filter and a band pulse filter, and diffraction grating.

The laser wavelengths for use in recording and reproducing may be the same or different.

In the two-photon absorption optical recording material of the invention, a recording pit formed by recording, that is, the size of the fluorescence intensity reduced part is preferably in the range of 10 nm to 100 μm, more preferably in the range of 50 nm to 5 μm, and more preferably in the range of 50 nm to 2 μm.

EXAMPLES

The examples of the invention are specifically described on the basis of the experiment results. Of course, the invention is not restricted to these examples.

Confirmation of quenching effect by a fluorescence quencher:

For confirming the degree of fluorescence quenching from a fluorescent dye by a fluorescence quencher, a coating solution is prepared with the following composition, and a polymer doped film having a thickness of about 1 μm is prepared by spin coating on a slide glass. The used fluorescence quencher Q-1 is a compound having a chemical structure shown below and has the same structure as the structure capable of functioning as the fluorescence quencher generated from fluorescence quencher precursor Lo-11 (oxazine cation).

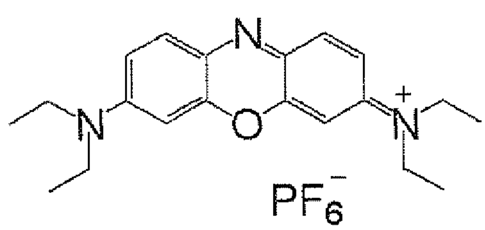

Q-1

| | |
|---|---|
| Fluorescent dye: FD-9 | 4.7 parts by mass |
| Binder: polyvinyl acetate | 14,400 parts by mass |
| Fluorescence quencher: Q-1 | Addition amount is shown in Table 1 |

TABLE 1

| Sample No. | Addition Amount of Q-1 (parts by mass) | Molar Ratio to FD-9 (%) | Fluorescence Intensity Ratio (%) | Quenching Rate (%) |
|---|---|---|---|---|
| #1 | 0 | 0 | 100 | 0 |

(continued)

| Sample No. | Addition Amount of Q-1 (parts by mass) | Molar Ratio to FD-9 (%) | Fluorescence Intensity Ratio (%) | Quenching Rate (%) |
|---|---|---|---|---|
| #2 | 0.06 | 1 | 79 | 21 |
| #3 | 0.13 | 2 | 63 | 37 |
| #4 | 0.25 | 4 | 48 | 52 |
| #5 | 0.50 | 8 | 25 | 75 |
| #6 | 0.63 | 10 | 20 | 80 |
| #7 | 1.26 | 20 | 10 | 90 |

Evaluation of quenching performance:

Each of the coated films prepared is excited by 405 nm, and the fluorescence intensity at that time is shown in Table 1 as a relative value to the sample to which a fluorescence quencher is not added (#1). It is confirmed that fluorescence quencher Q-1 can quench 21% of the fluorescence emitted from FD-9 by the addition amount of 1 mol% based on the amount of FD-9, about 50% by the addition amount of 4 mol%, and about 90% by the addition amount of 20 mol%. It can be seen that the technique of the invention can efficiently decrease the fluorescence intensity by generation of a small amount of the fluorescence quencher considering that trying to decrease the fluorescence intensity by changing the fluorescent dye itself results in the necessity of chemical change of 21% of the used fluorescent dye to decrease the fluorescence intensity by 21%, 50% of the fluorescent dye to decrease the fluorescence intensity by 50%, and 90% of the fluorescent dye to decrease the fluorescence intensity by 90%, as the technique disclosed in patent document 2.

Synthesizing method of two-photon absorption compound D-1:

Compound D-1 is synthesized according to the method shown below.

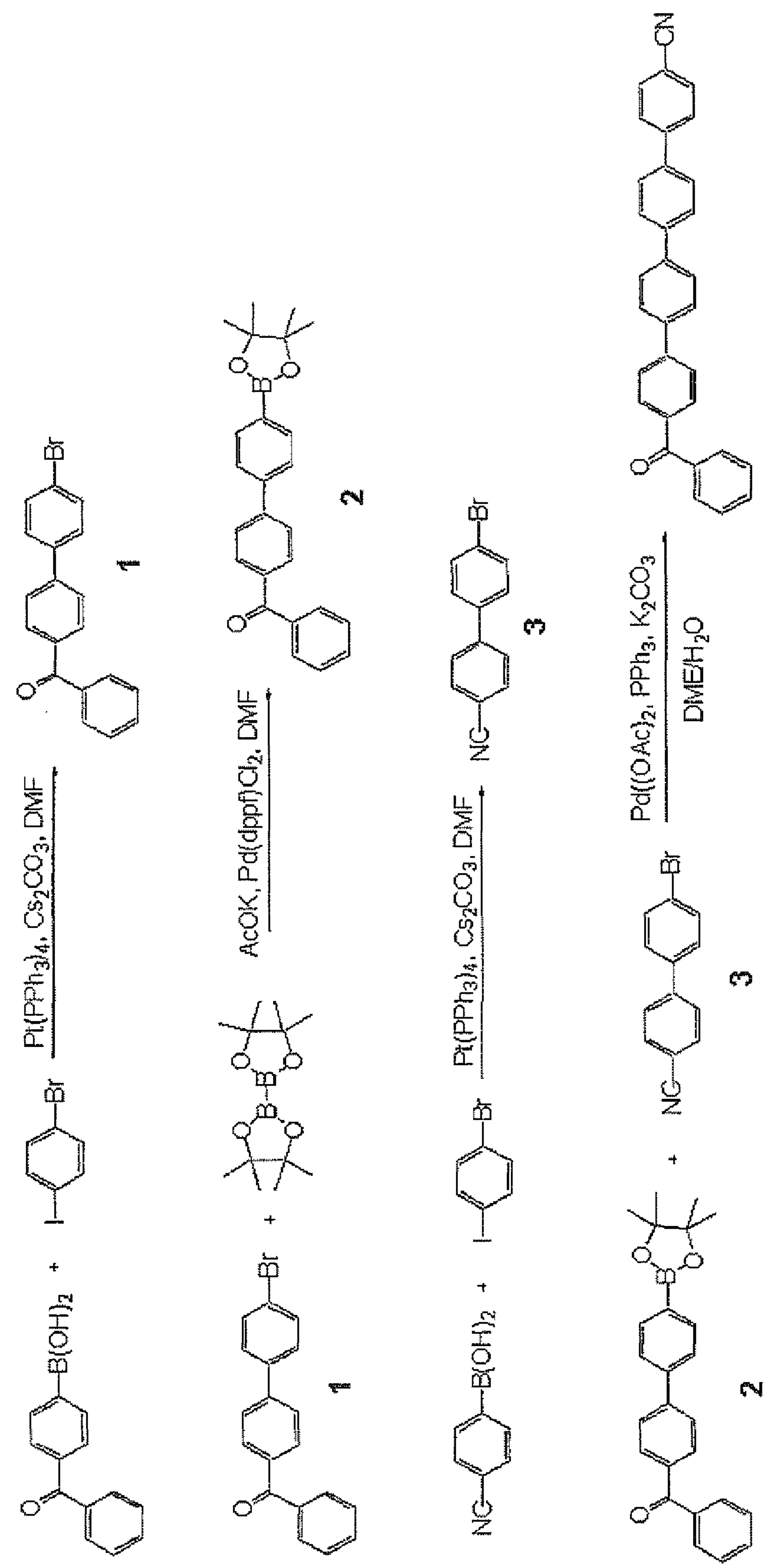
Pt(PPh3)4, Cs2CO3, DMF
1
AcOK, Pd(dppf)Cl2, DMF
1
2
Pt(PPh3)4, Cs2CO3, DMF
3
Pd((OAc)2, PPh3, K2CO3
DME/H2O
2
3

Synthesis of raw material compound 1:

4-Benzoylphenylboronic acid (2.7 g) (12 mmol) and 2.8 g (10 mmol) of 1-bromo-4-iodobenzene are dissolved in 50 ml of dimethylformamide (DMF), and 0.6 g (0.5 mmol) of tetrakis(triphenylphosphine)platinum and 6.5 g (20 mmol) of cesium carbonate are added to the above solution, and the solution is heated for 8 hours under nitrogen current.

After cooling the reaction solution, distilled water and about 600 ml of ethyl acetate are added to the reaction solution for extraction, the organic layer is separated by removing the aqueous layer, and the reaction product is dried with magnesium sulfate. The filtrate obtained by filtering the magnesium sulfate is subjected to evaporation drying and solidification with a rotary evaporator, and then the resulting product is refined with silica gel column (ethyl acetate/hexane: 1/10) to obtain 1.6 g of colorless raw material compound 1 (yield: 48%). The obtained compound 1 is confirmed to be an objective compound by mass spectrum and $^1$H NMR spectrum.

Synthesis of raw material compound 2:

Raw material compound 1 (0.68 g) (2 mmol), 0.63 g (2.5 mmol) of bis(pinacolate)diboron, 0.59 g (6 mmol) of potassium acetate, and 100 mg (0.12 mmol) of [1,1'-bis(diphenylphosphino)ferrocene]dichloropalladium are suspended in 50 ml of DMF, and the suspension is heated at 80°C for 9 hours under nitrogen current. After cooling the reaction solution, distilled water and ethyl acetate are added thereto for extraction, the organic layer is separated by removing the aqueous layer, and the reaction product is dried with magnesium sulfate. The filtrate obtained by filtering the magnesium sulfate is subjected to evaporation drying and solidification with a rotary evaporator, and then the resulting product is refined with silica gel column (ethyl acetate/hexane: 1/20) to obtain 0.65 g of colorless raw material compound 2 (yield: 85%). The obtained compound 2 is confirmed to be an objective compound by mass spectrum and $^1$H NMR spectrum.

Synthesis of raw material compound 3:

4-Cyanobenzeneboronic acid (1.76 g) (12 mmol) and 2.8 g (10 mmol) of 1-bromo-4-iodobenzene are dissolved in 60 ml of DMF, and 0.6 g (0.5 mmol) of tetrakis(triphenylphosphine)platinum and 6.5 g (20 mmol) of cesium carbonate are added to the above solution, and the solution is heated at 120°C for 8 hours under nitrogen current. After cooling the reaction solution, distilled water and about 600 ml of ethyl acetate are added to the reaction solution for extraction, the organic layer is separated by removing the aqueous layer, and the reaction product is dried with magnesium sulfate. The filtrate obtained by filtering the magnesium sulfate is subjected to evaporation drying and solidification with a rotary evaporator, and then the resulting product is refined with silica gel column (ethyl acetate/hexane: 1/10) to obtain 0.53 g of colorless raw material compound 3 (yield: 21%). The obtained compound 3 is confirmed to be an objective compound by mass spectrum and $^1$H NMR spectrum.

Synthesis of two-photon absorption compound D-1:

Raw material compound 2 (0.5 g) (1.3 mmol) and 0.33 g (1.3 mmol) of raw material compound 3 are dissolved in a mixed solvent of 20 ml of distilled water and 14 ml of ethylene glycol dimethyl ether, and then 14.6 mg (0.065 mmol) of palladium acetate, 34 mg (0.13 mmol) of triphenylphosphine, and 0.97 g (7 mmol) of potassium carbonate are added to the solution, and the reaction solution is refluxed while heating for 2 hours. After cooling the reaction solution, distilled water and dichloromethane are added to the reaction solution for extraction, the organic layer is separated by removing the aqueous layer, and the reaction product is dried with magnesium sulfate. The filtrate obtained by filtering the magnesium sulfate is subjected to evaporation drying and solidification with a rotary evaporator to obtain a crude product. The crude product obtained is refined by sublimation, and 0.11 g of an objective product is obtained (yield: 19%). The obtained compound is confirmed to be an objective compound D-1 by mass spectrum and $^1$H NMR spectrum.
$^1$H NMR ($CDCl_3$) 7.52 (t, 2H), 7.62 (t, 1H), 7.71 (d, 2H), 7.78 (m, 12H), 7.86 (d, 2H), 7.93 (d, 2H)

Preparation of two-photon absorption recording material 1:

Two-photon absorption recording material 1 is prepared with the following composition.

| | |
|---|---|
| Two-photon absorption compound: D-1 | 7.5 parts by mass |
| Fluorescence quencher precursor: Lo-11 | 2.2 parts by mass |
| Fluorescent dye: FD-1 | 2.0 parts by mass |
| Binder: polyvinyl acetate (manufactured by Sigma Aldrich, Mw: 113,000) | 500 parts by mass |

(continued)

| | |
|---|---|
| Coating solvent: methyl ethyl ketone | 14,400 parts by mass |

Preparation of two-photon absorption recording material 2:

Two-photon absorption recording material 2 is prepared with the following composition.

| | |
|---|---|
| Two-photon absorption compound: D-1 | 7.5 parts by mass |
| Fluorescence quencher precursor: Lo-11 | 2.2 parts by mass |
| Fluorescent dye: FD-9 | 4.7 parts by mass |
| Binder: polyvinyl acetate (manufactured by Sigma Aldrich, Mw: 113, 000) | 500 parts by mass |
| Coating solvent: methyl ethyl ketone | 14,400 parts by mass |

Preparation of two-photon absorption recording material 3:

Two-photon absorption recording material 3 is prepared with the following composition.

| | |
|---|---|
| Two-photon absorption compound: D-1 | 7.5 parts by mass |
| Fluorescence quencher precursor: Lo-11 1 | 2.2 parts by mass |
| Fluorescent dye: FD- 10 | 1.5 parts by mass |
| Binder: poly(methyl methacrylate-co-ethyl acrylate) (manufactured by Sigma Aldrich, Mw: 101,000) | 500 parts by mass |
| Coating solvent: methyl ethyl ketone | 14,400 parts by mass |

Preparation of two-photon absorption recording material 1 for comparison:

Two-photon absorption recording material 1 for comparison is prepared with the following composition.

| | |
|---|---|
| Two-photon absorption compound: D-1 | 7.5 parts by mass |
| Fluorescent dye: FD-1 | 2.0 parts by mass |
| Binder: polyvinyl acetate (manufactured by Sigma Aldrich, Mw: 113,000) | 500 parts by mass |
| Coating solvent: methyl ethyl ketone | 14,400 parts by mass |

Preparation of two-photon absorption recording material 2 for comparison:

Two-photon absorption recording material 2 for comparison is prepared with the following composition.

| | |
|---|---|
| Two-photon absorption compound: D-1 | 7.5 parts by mass |
| Fluorescent dye: FD-9 | 4.7 parts by mass |
| Binder: polyvinyl acetate (manufactured by Sigma Aldrich, Mw: 113,000) | 500 parts by mass |
| Coating solvent: methyl ethyl ketone | 14,400 parts by mass |

Manufacture of a recording medium:

Each of two-photon absorption recording media in the invention is manufactured by spin coating each of the above-prepared two-photon absorption recording materials 1 to 3 on a slide glass as a thin film. Each of recording media for comparison is also manufactured by spin coating in the same manner. The recording medium obtained from two-photon absorption recording material 1 is designated as two-photon absorption recording medium 1. Other recording media are also the same.

Method of evaluation of two-photon absorption recording performance:

Recording by two-photon absorption is performed by irradiation with second harmonic 522 nm of femto-second

laser of 1,045 nm (pulse duration: 200 fs, repetition: 2.85 GHz, peak power: 1 kW) through an objective lens of NA=0.85 on each two-photon recording medium. Reproduction of recording signals is performed by irradiation with CW ray of 405 nm semiconductor laser through the lens of NA=0.85 on each two-photon absorption recording medium, and detecting the obtained fluorescence intensity with a photomultiplier tube.

Results of evaluation of two-photon absorption recording performance:

The case in which a recording pit that is decreased in fluorescence intensity is formed on the two-photon recording light-irradiated part is taken as "presence of recording pit". For confirming whether the formed recording pit is the one formed by two-photon absorption or not, the dependency of the degree of decrease of the fluorescence intensity in the recorded part on the two-photon recording light strength is measured, and the results are shown in Table 2 below. In the case of recording pit formation by two-photon absorption, dependency on recording light strength is at least secondary or more.

TABLE 2

| Sample | Presence or Absence of Recording Pit | Dependency on Recording Light Strength |
|---|---|---|
| Two-photon absorption recording medium 1 | Presence | Tertiary |
| Two-photon absorption recording medium 2 | Presence | Quaternary |
| Two-photon absorption recording medium 3 | Presence | Quaternary |
| Comparative two-photon absorption recording medium 1 | Absence | None |
| Comparative two-photon absorption recording medium 2 | Absence | None |

The entire disclosure of Japanese Patent Application No. 2009-155935 filed on June 30, 2009, from which the benefit of foreign priority has been claimed in the present application, is incorporated herein by reference, as if fully set forth.

## Claims

**1.** A simultaneous two-photon absorption recording-reproduction method of recording and reproducing a data by inducing changes in the fluorescence intensities in a recorded part and an unrecorded part by simultaneous two-photon absorption, comprising:

generating a fluorescence quencher in a two-photon recording part; and
inducing quenching by excitation energy transfer between the fluorescence quencher and a fluorescent dye to physically quench the fluorescence by reproduction light from the fluorescent dye and decrease the fluorescence intensity in the recorded part.

**2.** A simultaneous two-photon absorption recording-reproduction method, comprising:

recording by making a simultaneous two-photon absorption recording material cause simultaneous two-photon absorption to generate a fluorescence quencher capable of inducing quenching by excitation energy transfer between the fluorescence quencher and a fluorescent dye,
irradiating the recording material with production light capable of exciting the fluorescent dye,
physically quenching the fluorescence from the fluorescent dye by the excitation energy transfer, and
reproducing by comparing the difference in the fluorescence intensity between the two-photon absorption recorded part where fluorescence intensity is decreased and the unrecorded part.

**3.** A simultaneous two-photon absorption recording material for use in the simultaneous two-photon absorption recording-reproduction method as claimed in claim 1 or 2, which generates a fluorescence quencher capable of inducing quenching by excitation energy transfer between the fluorescence quencher and a fluorescent dye by simultaneous two-photon absorption and physically quenching the fluorescence from the fluorescent dye.

**4.** The simultaneous two-photon absorption recording material as claimed in claim 3, comprising:

(a) a fluorescent dye having a linear absorption band at the reproduction wavelength and emitting fluorescence by exciting the linear absorption of the linear absorption band,
(b) a two-photon absorption compound not having a linear absorption band at the reproduction wavelength, and
(c) a fluorescence quencher precursor generating a fluorescence quencher upon reaction with the two-photon excitation state of the two-photon absorption compound.

**5.** The simultaneous two-photon absorption recording material as claimed in claim 3 or 4, wherein the fluorescent spectrum of the fluorescent dye and the absorption spectrum of the fluorescence quencher overlap each other at least partly.

**6.** The simultaneous two-photon absorption recording material as claimed in any of claim 3 to 5, wherein the maximum wavelength of the absorption spectrum of the fluorescence quencher generated from the fluorescence quencher precursor appears on the side longer than the maximum wavelength of the fluorescent spectrum of the fluorescent dye.

**7.** The simultaneous two-photon absorption recording material as claimed in any of claim 3 to 6, wherein the maximum wavelength of absorption spectrum of the fluorescent dye is on the side longer than the maximum wavelengths of linear absorption of the two-photon absorption compound and the fluorescence quencher precursor.

FIG. 1

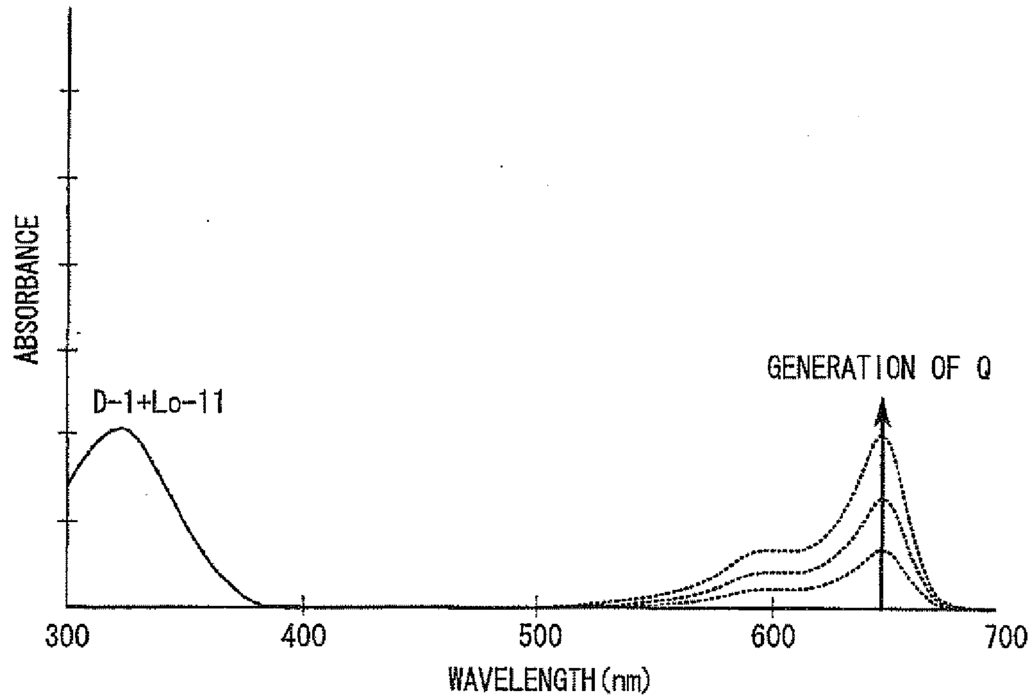
ABSORBANCE
D-1+Lo-11
GENERATION OF Q
300
400
500
600
700
WAVELENGTH (nm)

FIG. 2

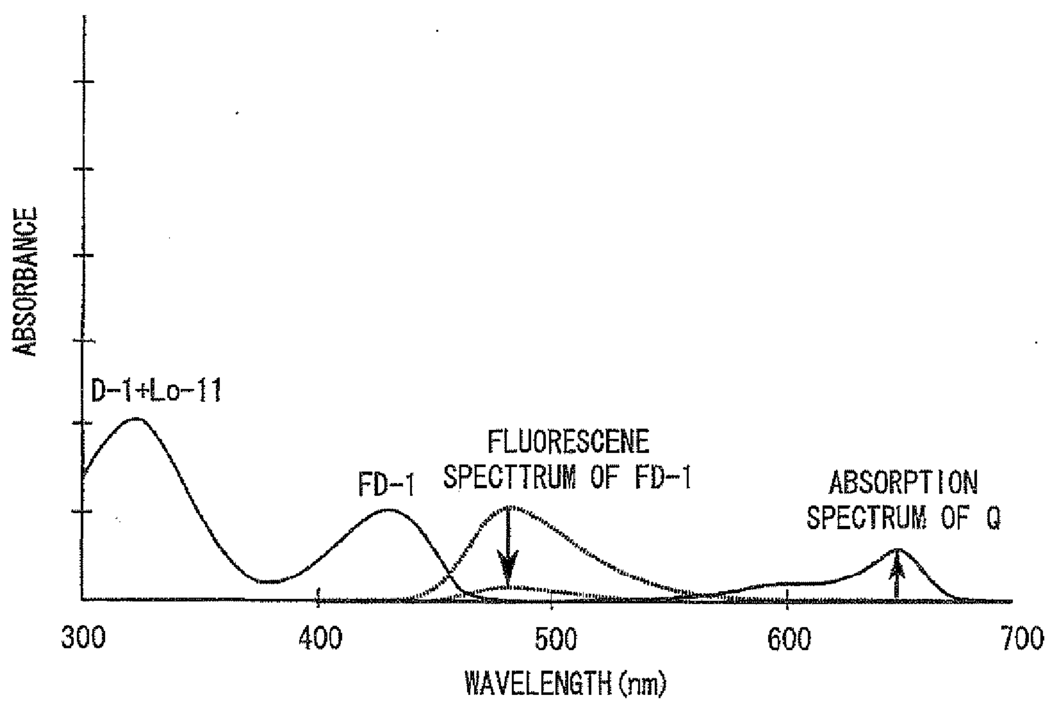
ABSORBANCE
D-1+Lo-11
FD-1
FLUORESCENE
SPECTTRUM OF FD-1
ABSORPTION
SPECTRUM OF Q
300
400
500
600
700
WAVELENGTH (nm)

Europäisches Patentamt
European Patent Office
Office européen des brevets

# EUROPEAN SEARCH REPORT

Application Number
EP 10 16 7884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2005 100606 A (FUJI PHOTO FILM CO LTD) 14 April 2005 (2005-04-14)<br>* abstract *<br>----- | 1-7 | INV.<br>G11B7/246 |
| A | JP 2003 027040 A (FUJI PHOTO FILM CO LTD) 29 January 2003 (2003-01-29)<br>* abstract *<br>* paragraph [0043]; example 1 *<br>----- | 1-7 | |

TECHNICAL FIELDS SEARCHED (IPC)
G11B
G02F

The present search report has been drawn up for all claims

1

| Place of search | Date of completion of the search | Examiner |
|---|---|---|
| The Hague | 17 September 2010 | Stabel, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 16 7884

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2010

| Patent document cited in search report | Publication date | Patent family member(s) | Publication date |
|---|---|---|---|
| JP 2005100606 A | 14-04-2005 | NONE | |
| JP 2003027040 A | 29-01-2003 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007087532 A
- JP 2005100606 A
- JP 2009255808 A
- JP 2002156454 A
- JP 2000281920 A
- JP 11279328 A
- JP 8240908 A
- JP 2000284475 A
- JP 2000144004 A
- JP 2005097532 A
- JP 2009155935 A

### Non-patent literature cited in the description

- **Haruo Inoue ; Katsuhiko Takagi ; Masako Sasaki ; Boku Shoushin.** Hikari Kagaku I (Photo Chemistry I). Maruzen Co., Ltd, September 1999, 95-99
- **Ulrich Brackmann.** Lambdachrome Laser Dyes. 2000
- **A.A. Angeluts ; N.I. Koroteev ; S.A. Krikunov ; S.A. Magnitskii ; D.V. Malakhv ; V.V. Shubin ; P.M. Potokov.** *Proc. SPIE,* 1999, vol. 3732, 232
- Nikohshi Kyushu Kiroku Zairyo. **Yoshihiro Okino ; Jisedai Hikari.** Memory to System Gijutsu. CMC Publishing Co., Ltd, 2009, 219-231
- **T. Kogej et al.** *Chem. Phys. Lett.,* 1998, vol. 298, 1